# EUROPEAN PATENT APPLICATION

(11) **EP 4 297 475 A1**
(43) Date of publication of application: **27.12.2023**
(21) Application number: 22766160.0
(22) Date of filing: 24.02.2022
(51) Int. Cl.: H04W 28/02

(54) **COMMUNICATION METHOD AND APPARATUS**

(30) Priority: 12.03.2021 CN 202110271670
(71) Applicant: Huawei Technologies Co., Ltd., Shenzhen, Guangdong 518129 (CN)
(72) Inventor: CHEN, Erkai, Shenzhen, Guangdong 518129 (CN); LIAO, Shuri, Shenzhen, Guangdong 518129 (CN); CAO, Youlong, Shenzhen, Guangdong 518129 (CN); DOU, Shengyue, Shenzhen, Guangdong 518129 (CN)
(74) Representative: Huawei European IPR
(86) International application number: PCT/CN2022/077700
(87) International publication number: WO 2022/188634

(57) **Abstract**

This application provides a communication method and an apparatus, to help improve transmission efficiency of an uplink XR service. The method includes: A terminal device sends, to a core network device, a first identifier indicating a transmission requirement. Then, the terminal device obtains, based on a first parameter sent by the core network device, a quality of service flow that meets the transmission requirement, and sends a plurality of pieces of first information to an access network device based on the quality of service flow. Each piece of first information includes a second identifier. The second identifier includes marking information of a data unit to which the first information belongs. This method helps a plurality of pieces of first information that belong to a same data unit be considered as a whole for transmission, to improve the transmission efficiency of the uplink XR service.

## Description

### TECHNICAL FIELD

This application relates to the field of communication technologies, and in particular, to a communication method and an apparatus.

### BACKGROUND

In a wireless communication network, an extended reality (extended reality, XR) technology has advantages such as multiple perspectives and strong interactivity, can provide a brand-new visual experience for a user, and has great application value and commercial potential. XR includes technologies, for example, virtual reality (virtual reality, VR), augmented reality (augmented reality, AR), and mixed reality (mix reality, MR), and can be widely applied to many fields, for example, entertainment, gaming, healthcare, advertising, industry, online education, a tactile internet, and engineering.

A feature of XR data is that there is a specific dependency relationship between data. For example, a video picture frame in the XR data may be generally divided into a plurality of packets. If transmission of a packet in the plurality of packets fails, the entire video picture frame may not be correctly received. For another example, in the tactile internet, information such as video information, tactile information, and control information is data that has an internal association relationship. When transmission of a type of information in the information is lost or delayed, an entire service effect and a user experience are affected.

As the XR technology develops, an XR service has an increasingly high requirement on an uplink transmission rate. For example, uplink data needs to be transmitted in AR. Uplink transmission of a video is used as an example. According to industry evaluation, an uplink transmission rate required for an AR basic experience is about 2 Mbps, and an uplink transmission rate required for an AR advanced experience is up to 10 Mbps. In addition, in uplink transmission of a video service, for transmission of each video frame, currently, a most used method is to divide a video frame into dozens of packets at a network transport layer. In a network transmission process, if an error occurs in transmission of one of the packets, the entire video frame cannot be recovered. Therefore, how to ensure that uplink data can be correctly transmitted, to improve transmission efficiency of an uplink XR service becomes an urgent problem to be resolved.

### SUMMARY

Embodiments of this application provide a communication method and an apparatus.

According to a first aspect, an embodiment of this application provides a communication method. The method may be performed by a terminal device, or may be performed by a component (for example, a processor, a chip, or a chip system) of the terminal device, and the method includes: sending a first identifier, where the first identifier indicates a transmission requirement; and receiving a first parameter, where the first parameter indicates that a quality of service flow meets the transmission requirement.

According to the method, the terminal device obtains the quality of service flow that meets the transmission requirement to transmit to-be-transmitted data, to ensure that the to-be-transmitted data may be transmitted as a whole, meet a synchronization requirement between the to-be-transmitted data, and improve transmission efficiency of the to-be-transmitted data.

With reference to the first aspect, in some implementations of the first aspect, the terminal device sends first information based on the quality of service flow, where the first information includes a second identifier, and the second identifier includes marking information of a data unit to which the first information belongs.

With reference to the first aspect, in some implementations of the first aspect, the terminal device sends the first identifier to a core network device; receives the first parameter from the core network device; and sends the first information to an access network device based on the quality of service flow, where the first information includes the second identifier, and the second identifier includes the marking information of the data unit to which the first information belongs.

Optionally, the first identifier may be sent by the terminal device to another network element such as the core network device, or may be transferred between different components in the terminal device. For example, a processing module of the terminal device transmits the first identifier to a communication module of the terminal device. The processing module may be a processing unit, a processor, or the like. The communication module may be a transmitter, a radio frequency, or the like. Subsequently, the first identifier may be sent to another network element such as the core network device through the communication module. Similarly, the first parameter may be obtained by the terminal device from another network element such as the core network device, or may be transferred between different components in the terminal device. The first information may be sent by the terminal device to another network element such as the access network device, or may be transferred between different components in the terminal device.

According to the method, the terminal device can perform integrity transmission on data or information that has a synchronization requirement or a dependency relationship. These pieces of data or information are considered as a whole for transmission, to meet the synchronization requirement between the data or information, so that transmission efficiency of an uplink XR service is improved.

Optionally, the data unit is source data of an XR service obtained by the terminal device, and the first information is a divided packet in the data unit.

With reference to the first aspect, in some implementations of the first aspect, the second identifier in the first information further includes a quality of service flow identifier. The access network device receives the first information, and may determine, based on the quality of service flow identifier, the quality of service flow to which the first message is mapped.

With reference to the first aspect, in some implementations of the first aspect, the second identifier includes the marking information of the data unit to which the first information belongs, and the marking information includes one or more types of the following information:
a quantity of pieces of first information in the data unit;
an identifier of the data unit;
generation time information of the data unit; and
a data volume of the data unit.

The second identifier helps the access network device identify information about the data unit to which the received first information belongs, and further determine whether an uplink transmission resource needs to be adjusted for the first information to be sent by the terminal device.

With reference to the first aspect, in some implementations of the first aspect, when a data unit having an integrity transmission requirement has two or more pieces of first information, second identifiers are the same in the two or more pieces of first information.

With reference to the first aspect, in some implementations of the first aspect, the two or more pieces of first information that have same second identifiers may correspond to data of a same picture frame, and the data of the same picture frame may belong to a same data unit. In this way, data included in a plurality of pieces of first information corresponding to the same picture frame may be subsequently considered as a whole by the terminal device for transmission, to avoid retransmission by the terminal device due to a packet loss in an access network. This improves transmission efficiency of the terminal device.

With reference to the first aspect, in some implementations of the first aspect, the two or more pieces of first information that have same second identifiers may correspond to data in a same packet group, and the data in the same packet group belongs to a same data unit. In this way, data included in a plurality of pieces of first information corresponding to the same packet group may be subsequently considered as a whole by the terminal device for transmission, to avoid retransmission by the terminal device due to a packet loss in an access network. This improves transmission efficiency of the terminal device.

With reference to the first aspect, in some implementations of the first aspect, the two or more pieces of first information that have same second identifiers may correspond to a same piece of slice (slice) data or a same piece of tile (tile) data of a picture frame. In this way, the same piece of slice data or the same piece of tile data may be subsequently considered as a whole by the terminal device for transmission, to avoid retransmission by the terminal device due to a packet loss in an access network. This improves transmission efficiency of the terminal device.

With reference to the first aspect, in some implementations of the first aspect, the two or more pieces of first information that have same second identifiers may correspond to base layer data or enhancement layer data of a same picture frame. The base layer data of the same picture frame is used as an example. The base layer data of the same picture frame may belong to a same data unit. In this way, data included in a plurality of pieces of first information corresponding to the base layer data of the same picture frame may be subsequently considered as a whole by the terminal device for transmission, to avoid retransmission by the terminal device due to a packet loss in an access network. This improves transmission efficiency of the terminal device. Similarly, the enhancement layer data of the same picture frame may belong to a same data unit. In this way, data included in a plurality of pieces of first information corresponding to the enhancement layer data of the same picture frame may be subsequently considered as a whole by the terminal device for transmission.

With reference to the first aspect, in some implementations of the first aspect, the two or more pieces of first information that have same second identifiers may correspond to data of a picture frame and audio data synchronized with the picture frame. The data of the picture frame and the audio data synchronized with the picture frame may belong to a same data unit. In this way, data included in a plurality of pieces of first information corresponding to the data of the picture frame and the audio data synchronized with the picture frame may be subsequently considered as a whole by the terminal device for transmission. This improves a user experience of audio and video synchronization.

With reference to the first aspect, in some implementations of the first aspect, the two or more pieces of first information that have same second identifiers may correspond to data of a same task, a same event, a same object, or a same type. For example, for a tactile internet, one or more pieces of information such as action information, tactile information, a picture frame, or audio information may be used as the data of the same task, the same event, the same object, or the same type, and the data of the same task, the same time, the same object, or the same type may belong to a same data unit. In this way, data included in a plurality of pieces of first information corresponding to the data of the same task, the same event, the same object, or the same type may be subsequently considered as a whole by the terminal device for transmission, to avoid retransmission by the terminal device due to a packet loss in an access network. This improves transmission efficiency of the terminal device.

With reference to the first aspect, in some implementations of the first aspect, when the data unit having the integrity transmission requirement has only one piece of first information, the first information is one data unit and is transmitted as a whole, and the second identifier may still be carried in the first information.

With reference to the first aspect, in some implementations of the first aspect, the first information further includes a third identifier, and the third identifier is used to mark the first information. The third identifier includes one or more types of the following information:
an index of the first information in the data unit to which the first information belongs;
an identifier of the first information; and
a data volume of the first information.

The third identifier helps the access network device or the core network device identify whether the plurality of pieces of received first information belong to a same data unit, and further determine whether the uplink transmission resource needs to be adjusted for the first information to be sent by the terminal device.

With reference to the first aspect, in some implementations of the first aspect, before sending the first information to the access network device, the terminal device sends a fourth identifier to the access network device, where the fourth identifier includes the quality of service flow identifier and/or one or more types of information in the marking information of the data unit to which the first information to be sent by the terminal device belongs.

After receiving the fourth identifier, the access network device may determine, based on the quality of service flow identifier, the quality of service flow corresponding to the first information to be sent by the terminal device, to further learn of a transmission requirement of the to-be-sent first information, and assist in uplink resource scheduling.

After receiving the fourth identifier, the access network device may obtain in advance, based on the marking information of the data unit, a case in which the plurality of pieces of first information are considered as a whole for transmission, and schedule an uplink resource for the terminal device in advance, to ensure that the terminal device can complete uplink transmission as soon as possible.

With reference to the first aspect, in some implementations of the first aspect, the fourth identifier further includes time information of first information that arrives at the access network device for the first time. This helps the access network device receive the first information at determined time, and avoids a case of missing detection.

With reference to the first aspect, in some implementations of the first aspect, the terminal device may send the fourth identifier to the access network device through any one of radio resource control RRC signaling, a media access control control element MAC CE, a physical uplink control channel PUCCH, or a physical uplink shared channel PUSCH.

The fourth identifier is used, so that the access network device may schedule, based on the fourth identifier, the uplink transmission resource for the plurality of pieces of first information that are to be sent by the terminal device and considered as a whole, to ensure that the terminal device can complete uplink transmission as soon as possible, achieve an objective of integrity transmission, and ensure that end-to-end transmission time meets a delay requirement.

With reference to the first aspect, in some implementations of the first aspect, if there is only one piece of first information, the foregoing communication method is still applicable. The terminal device sends the first identifier to the core network device, so that the core network device configures, for the first information, the quality of service flow that meets the transmission requirement of the first information. This improves transmission efficiency of the first information. The terminal device sends the fourth identifier before sending the first information, so that the access device learns of an uplink resource requirement of the first information, and schedules an appropriate uplink resource for the terminal device. This improves transmission efficiency of the uplink XR service.

According to a second aspect, an embodiment of this application provides a communication method. The method may be performed by a terminal device, or may be performed by a component (for example, a processor, a chip, or a chip system) of the terminal device, and the method includes: sending a fourth identifier, where the fourth identifier includes a quality of service flow identifier, and a quality of service flow corresponding to the quality of service flow identifier meets a transmission requirement; and sending first information based on the quality of service flow, where the first information includes a second identifier, and the second identifier includes marking information of a data unit to which the first information belongs.

With reference to the second aspect, in some implementations of the second aspect, the terminal device sends the fourth identifier to an access network device; and sends the first information to the access network based on the quality of service flow, where the first information includes the second identifier, and the second identifier includes the marking information of the data unit to which the first information belongs.

Optionally, the fourth identifier may be sent by the terminal device to another network element, or may be transferred between different components in the terminal device. For example, a processing module of the terminal device transmits the fourth identifier to a communication module of the terminal device. The processing module may be a processing unit, a processor, or the like. The communication module may be a transmitter, a radio frequency, or the like. Subsequently, the fourth identifier may be sent to another network element such as the core network device through the communication module. Similarly, the first information may be sent by the terminal device to another network element such as the access network device, or may be transferred between different components in the terminal device.

According to the method, after receiving the fourth identifier, the access network device can learn of quality of service flow information in which the first information to be sent by the terminal device is located and/or an uplink resource requirement of the first information, and further schedule an appropriate uplink resource for the terminal device. In addition, the terminal device can perform integrity transmission on data or information that has a synchronization requirement or a dependency relationship, to meet the synchronization requirement between the data or information, so that transmission efficiency of an uplink XR service is improved.

With reference to the second aspect, in some implementations of the second aspect, the second identifier in the first information includes the quality of service flow identifier.

With reference to the second aspect, in some implementations of the second aspect, when the terminal device has a plurality of pieces of first information, the second identifier includes the marking information of the data unit to which the plurality of pieces of first information belong, and the marking information includes one or more types of the following information:
a quantity of pieces of first information in the data unit;
an identifier of the data unit;
generation time information of the data unit; and
a data volume of the data unit.

The second identifier helps the access network device identify the information about the data unit to which the received first information belongs, and further determine whether an uplink transmission resource needs to be adjusted for the plurality of pieces of first information to be sent by the terminal device.

With reference to the second aspect, in some implementations of the second aspect, the first information further includes a third identifier, and the third identifier is used to mark the first information. The third identifier includes one or more types of the following information:
an index of the first information in the data unit to which the first information belongs;
an identifier of the first information; and
a data volume of the first information.

The third identifier helps the access network device identify whether the plurality of pieces of received first information belong to a same data unit, and further determine whether the uplink transmission resource needs to be adjusted for the first information to be sent by the terminal device.

With reference to the second aspect, in some implementations of the second aspect, the fourth identifier sent by the terminal device includes one or more types of information in the marking information.

With reference to the second aspect, in some implementations of the second aspect, the fourth identifier further includes time information of first information that arrives at the access network device for the first time.

With reference to the second aspect, in some implementations of the second aspect, the terminal device may send the fourth identifier to the access network device through any one of radio resource control RRC signaling, a media access control control element MAC CE, a physical uplink control channel PUCCH, or a physical uplink shared channel PUSCH.

The fourth identifier is used, so that the access network device may schedule, based on the fourth identifier, the uplink transmission resource for the plurality of pieces of first information that are to be sent by the terminal device and considered as a whole, to ensure that the terminal device can complete uplink transmission as soon as possible, achieve an objective of integrity transmission, and ensure that end-to-end transmission time meets a delay requirement.

With reference to the second aspect, in some implementations of the second aspect, if there is only one piece of first information, the foregoing communication method is still applicable. The terminal device sends the fourth identifier, so that the access device learns of the uplink resource requirement of the first information, and schedules an appropriate uplink resource for the terminal device. This improves the transmission efficiency of the uplink XR service.

According to a third aspect, an embodiment of this application provides a communication method. The method may be performed by a core network device, or may be performed by a functional network element in the core network device, and the method includes: receiving a first identifier, where the first identifier indicates a transmission requirement; and sending a first parameter, where the first parameter indicates that a quality of service flow meets the transmission requirement.

With reference to the third aspect, in some implementations of the third aspect, the core network device receives the first identifier from a terminal device, where the first identifier indicates the transmission requirement of the terminal device. The core network device sends the first parameter to the terminal device.

Optionally, the first identifier may be sent by the terminal device; or may be transferred between different components in the terminal device, and sent by the component of the terminal device. For example, a processing module of the terminal device transmits the first identifier to a communication module of the terminal device. The processing module may be a processing unit, a processor, or the like. The communication module may be a transmitter, a radio frequency, or the like. Subsequently, the first identifier may be sent to the core network device through the communication module. Similarly, the first parameter may be sent by the core network device to the terminal device, or may be transferred between different components in the terminal device.

According to the method, the terminal device can perform integrity transmission on data or information that has a synchronization requirement or a dependency relationship based on the quality of service flow, to meet the synchronization requirement between the data or information, so that transmission efficiency of an uplink XR service is improved.

With reference to the third aspect, in some implementations of the third aspect, the core network device sends the first parameter to an access network device or a user plane network element. The first parameter helps the core network device/user plane network element learn that the terminal device performs integrity transmission on the data or information that has the synchronization requirement or the dependency relationship, and schedules an appropriate uplink resource for the data or information.

With reference to the third aspect, in some implementations of the third aspect, the terminal device sends first information based on the quality of service flow, where the first information includes a second identifier, and the second identifier includes marking information of a data unit to which the first information belongs.

With reference to the third aspect, in some implementations of the third aspect, the second identifier in the first information includes a quality of service flow identifier.

With reference to the third aspect, in some implementations of the third aspect, when the terminal device has a plurality of pieces of first information, the second identifier includes the marking information of the same data unit to which the plurality of pieces of first information belong, and the marking information includes one or more types of the following information:
a quantity of pieces of first information in the data unit;
an identifier of the data unit;
generation time information of the data unit; and
a data volume of the data unit.

The second identifier helps the access network device or the core network device identify information about the data unit to which the received first information belongs, and further determine whether an uplink transmission resource needs to be adjusted for the first information to be sent by the terminal device.

With reference to the third aspect, in some implementations of the third aspect, the first information further includes a third identifier, and the third identifier is used to mark the first information. The third identifier includes one or more types of the following information:
an index of the first information in the data unit to which the first information belongs;
an identifier of the first information; and
a data volume of the first information.

The third identifier helps the access network device or the core network device identify whether the plurality of pieces of received first information belong to a same data unit, and further determine whether the uplink transmission resource needs to be adjusted for the first information to be sent by the terminal device.

With reference to the third aspect, in some implementations of the third aspect, when there is one piece of first information, the foregoing communication method is still applicable. The core network device receives the first identifier, so that the core network device configures, for the first information, the quality of service flow that meets the transmission requirement of the first information. This improves transmission efficiency of the first information.

According to a fourth aspect, an embodiment of this application provides a communication method. The method may be performed by an access network device, or may be performed by a component (for example, a processor, a chip, or a chip system) of the access network device, and the method includes: receiving first information, where the first information includes a second identifier, and the second identifier includes marking information of a data unit to which the first information belongs.

With reference to the fourth aspect, in some implementations of the fourth aspect, the access network device receives the first information from a terminal device, where the first information includes the second identifier, and the second identifier includes the marking information of the data unit to which the first information belongs.

Optionally, the first information may be received by the access network device, or may be transferred between different components of the access network device. For example, a communication module of the access network device transmits the first information to a processing module of the access network device. The communication module may be a receiver, a radio frequency, or the like. The processing module may be a processing unit, a processor, or the like.

According to the foregoing method, the access network device may learn that the terminal device performs integrity transmission on data or information that has a synchronization requirement or a dependency relationship. This improves transmission efficiency of an uplink XR service.

With reference to the fourth aspect, in some implementations of the fourth aspect, the second identifier further includes a quality of service flow identifier, and the quality of service flow identifier indicates a quality of service flow corresponding to the first information of the terminal device.

With reference to the fourth aspect, in some implementations of the fourth aspect, when there are a plurality of pieces of first information, the second identifier includes the marking information of the data unit to which the plurality of pieces of first information belong, and the marking information indicates one or more types of the following information:
a quantity of pieces of first information in the data unit;
an identifier of the data unit;
generation time information of the data unit; and
a data volume of the data unit.

The second identifier helps the access network device or a core network device identify information about the data unit to which the received first information belongs, and further determine whether an uplink transmission resource needs to be adjusted for the first information to be sent by the terminal device.

With reference to the fourth aspect, in some implementations of the fourth aspect, the first information further includes a third identifier, and the third identifier is used to mark the first information. The third identifier includes one or more types of the following information:
an index of the first information in the data unit to which the first information belongs;
an identifier of the first information; and
a data volume of the first information.

The third identifier helps the access network device or the core network device identify whether the plurality of pieces of received first information belong to a same data unit, and further determine whether the uplink transmission resource needs to be adjusted for the first information to be sent by the terminal device.

With reference to the fourth aspect, in some implementations of the fourth aspect, before the access network device receives the first information sent by the terminal device, the access network device receives a first parameter sent by the core network device, where the first parameter indicates that the quality of service flow corresponding to the first parameter meets a transmission requirement.

With reference to the fourth aspect, in some implementations of the fourth aspect, before the access network device receives the first information sent by the terminal device, the access network device receives a fourth identifier sent by the terminal device, where the fourth identifier includes the quality of service flow identifier and/or one or more types of information in the marking information of the to-be-transmitted data unit of the terminal device.

With reference to the fourth aspect, in some implementations of the fourth aspect, the fourth identifier further includes time information of first information that arrives at the access network device for the first time.

With reference to the fourth aspect, in some implementations of the fourth aspect, the access network device may receive, through any one of radio resource control RRC signaling, a media access control control element MAC CE, a physical uplink control channel PUCCH, or a physical uplink shared channel PUSCH, the fourth identifier sent by the terminal device.

The fourth identifier is used, so that the access network device may schedule, based on the fourth identifier, the uplink transmission resource for the plurality of pieces of first information that are to be sent by the terminal device and considered as a whole, to ensure that the terminal device can complete uplink transmission as soon as possible, achieve an objective of integrity transmission, and ensure that end-to-end transmission time meets a delay requirement.

With reference to the fourth aspect, in some implementations of the fourth aspect, if there is only one piece of first information, the foregoing communication method is still applicable. The terminal device sends the fourth identifier, so that the access device learns of the uplink resource requirement of the first information, and schedules an appropriate uplink resource for the terminal device. This improves transmission efficiency of the uplink XR service.

According to a fifth aspect, an embodiment of this application provides a communication method. The method may be performed by an access network device, or may be performed by a component (for example, a processor, a chip, or a chip system) of the access network device, and the method includes: receiving a fourth identifier, where the fourth identifier includes a quality of service flow identifier, and a quality of service flow corresponding to the quality of service flow identifier meets a transmission requirement; and receiving first information based on the quality of service flow, where the first information includes a second identifier, and the second identifier includes marking information of a data unit to which the first information belongs.

With reference to the fifth aspect, in some implementations of the fifth aspect, the access network device receives the fourth identifier from a terminal device; and receives the first information from the terminal device based on the quality of service flow, where the first information includes the second identifier, and the second identifier includes the marking information of the data unit to which the first information belongs.

According to the method, the access network device may learn of, based on the fourth identifier, a requirement of the first information to be sent by the terminal device for an uplink resource, and further schedule an appropriate uplink resource for the terminal device. This improves transmission efficiency of the first information of the terminal device.

With reference to the fifth aspect, in some implementations of the fifth aspect, the fourth identifier includes the marking information of the data unit to which the first information belongs, and the marking information includes one or more types of the following information:
a quantity of pieces of first information in the data unit;
an identifier of the data unit;
generation time information of the data unit; and
a data volume of the data unit.

With reference to the fifth aspect, in some implementations of the fifth aspect, the fourth identifier further includes time information of first information that arrives at the access network device for the first time.

With reference to the fifth aspect, in some implementations of the fifth aspect, the access network device may receive the fourth identifier through any one of radio resource control RRC signaling, a media access control control element MAC CE, a physical uplink control channel PUCCH, or a physical uplink shared channel PUSCH.

The fourth identifier is used, so that the access network device may schedule, based on the fourth identifier, an uplink transmission resource for a plurality of pieces of first information that are to be sent by the terminal device and considered as a whole, to ensure that the terminal device can complete uplink transmission as soon as possible, achieve an objective of integrity transmission, and ensure that end-to-end transmission time meets a delay requirement.

With reference to the fifth aspect, in some implementations of the fifth aspect, when the access network device receives the plurality of pieces of first information, the plurality of pieces of first information each include a second identifier, and the second identifier includes one or more types of information in the marking information.

The second identifier helps the access network device identify information about the data unit to which the received first information belongs, and further determine whether the uplink transmission resource needs to be adjusted for the plurality of pieces of first information to be sent by the terminal device.

With reference to the fifth aspect, in some implementations of the fifth aspect, the first information further includes a third identifier, and the third identifier is used to mark the first information. The third identifier includes one or more types of the following information:
an index of the first information in the data unit to which the first information belongs;
an identifier of the first information; and
a data volume of the first information.

The third identifier helps the access network device identify whether the plurality of pieces of received first information belong to a same data unit, and further determine whether the uplink transmission resource needs to be adjusted for the first information to be sent by the terminal device.

With reference to the fifth aspect, in some implementations of the fifth aspect, if there is only one piece of first information, the foregoing communication method is still applicable. The access network device receives the fourth identifier, so that the access network device may learn of the uplink resource requirement of the first information, and schedule an appropriate uplink resource for the terminal device. This improves transmission efficiency of the first information.

According to a sixth aspect, a method may be performed by a terminal device, or may be performed by a component (for example, a processor, a chip, or a chip system) of the terminal device, and the method includes: sending first information, where the first information includes a second identifier, and the second identifier includes marking information of a data unit to which the first information belongs.

With reference to the sixth aspect, in some implementations of the sixth aspect, the terminal device sends the first information, where the first information includes the second identifier, and the second identifier includes the marking information of the data unit to which the first information belongs.

Optionally, the first information may be sent by the terminal device, or may be transferred between different components in the terminal device. For example, a processing module of the terminal device transmits the first information to a communication module of the terminal device. The processing module may be a processing unit, a processor, or the like. The communication module may be a transmitter, a radio frequency, or the like. Subsequently, the first information may be sent to another network element such as an access network device through the communication module.

According to the foregoing method, the terminal device may perform integrity transmission on data or information that has a synchronization requirement or a dependency relationship. This improves transmission efficiency of an uplink XR service.

With reference to the sixth aspect, in some implementations of the sixth aspect, the second identifier further includes a quality of service flow identifier, and the quality of service flow identifier indicates a quality of service flow corresponding to the first information.

With reference to the sixth aspect, in some implementations of the sixth aspect, when there are a plurality of pieces of first information, the second identifier includes the marking information of the data unit to which the plurality of pieces of first information belong, and the marking information indicates one or more types of the following information:
a quantity of pieces of first information in the data unit;
an identifier of the data unit;
generation time information of the data unit; and
a data volume of the data unit.

The second identifier helps the access network device or a core network device identify information about the data unit to which the received first information belongs, and further determine whether an uplink transmission resource needs to be adjusted for the first information to be sent by the terminal device.

With reference to the sixth aspect, in some implementations of the sixth aspect, the first information further includes a third identifier, and the third identifier is used to mark the first information. The third identifier includes one or more types of the following information:
an index of the first information in the data unit to which the first information belongs;
an identifier of the first information; and
a data volume of the first information.

The third identifier helps the access network device or the core network device identify whether the plurality of pieces of received first information belong to a same data unit, and further determine whether the uplink transmission resource needs to be adjusted for the first information to be sent by the terminal device.

With reference to the sixth aspect, in some implementations of the sixth aspect, before sending the first information to the access network device, the terminal device sends a fourth identifier to the access network device, where the fourth identifier includes the quality of service flow identifier and/or one or more types of information in the marking information.

With reference to the sixth aspect, in some implementations of the sixth aspect, the fourth identifier further includes time information of first information that arrives at the access network device for the first time. This helps the access network device receive the first information at determined time, and avoids a case of missing detection.

With reference to the sixth aspect, in some implementations of the sixth aspect, the terminal device may send the fourth identifier to the access network device through any one of radio resource control RRC signaling, a media access control control element MAC CE, a physical uplink control channel PUCCH, or a physical uplink shared channel PUSCH.

The fourth identifier is used, so that the access network device may schedule, based on the fourth identifier, the uplink transmission resource for the plurality of pieces of first information that are to be sent by the terminal device, to ensure that the terminal device can complete uplink transmission as soon as possible, achieve an objective of integrity transmission, and ensure that end-to-end transmission time meets a delay requirement.

According to a seventh aspect, an embodiment of this application provides an apparatus. The apparatus may implement the method according to any one of the first aspect to the sixth aspect or the possible implementations of the first aspect to the sixth aspect. The apparatus includes a corresponding unit or component configured to perform the foregoing method. The unit included in the apparatus may be implemented by software and/or hardware. The apparatus may be, for example, a terminal or a network device, or may be a chip, a chip system, a processor, or the like that supports a terminal or a network device in implementing the foregoing method.

According to an eighth aspect, an embodiment of this application provides an apparatus. The apparatus includes: a processor, where the processor is coupled to a memory, and the memory is configured to store a program or instructions; and when the program or the instructions are executed by the processor, the apparatus is enabled to implement the method according to any one of the first aspect to the sixth aspect or the possible implementations of the first aspect to the sixth aspect.

According to a ninth aspect, an embodiment of this application provides a computer-readable storage medium. The computer-readable storage medium stores a computer program or instructions; and when the computer program or the instructions are executed, a computer is enabled to perform the method according to any one of the first aspect to the sixth aspect or the possible implementations of the first aspect to the sixth aspect.

According to a tenth aspect, an embodiment of this application provides a computer program product. The computer program product includes computer program code; and when the computer program code is run on a computer, the computer is enabled to perform the method according to any one of the first aspect to the sixth aspect or the possible implementations of the first aspect to the sixth aspect.

According to an eleventh aspect, an embodiment of this application provides a chip. The chip includes: a processor, where the processor is coupled to a memory, and the memory is configured to store a program or instructions; and when the program or the instructions are executed by the processor, the chip is enabled to implement the method according to any one of the first aspect to the sixth aspect or the possible implementations of the first aspect to the sixth aspect.

According to a twelfth aspect, an embodiment of this application provides a communication system. The communication system includes: the apparatus according to the seventh aspect.

According to a thirteenth aspect, an embodiment of this application provides a communication system. The communication system includes: the apparatus according to the eighth aspect.

### BRIEF DESCRIPTION OF DRAWINGS

FIG. 1 is a schematic diagram of a communication system to which embodiments of this application are applied;
FIG. 2 is a schematic diagram of an architecture of a communication system to which embodiments of this application are applied;
FIG. 3 to FIG. 5 are schematic diagrams of several scenarios to which embodiments of this application are applicable;
FIG. 6 is a schematic flowchart corresponding to a communication method according to this application;
FIG. 7 is a schematic diagram of a location of a second identifier in first information according to an embodiment of this application;
FIG. 8a and FIG. 8b are schematic diagrams in which a fourth identifier is used as a control element at a MAC layer according to an embodiment of this application;
FIG. 9 is a schematic flowchart corresponding to a communication method according to this application;
FIG. 10 is a schematic diagram of a structure of a communication apparatus according to an embodiment of this application;
FIG. 11 is a schematic diagram of a structure of a terminal device according to an embodiment of this application;
FIG. 12 is a schematic diagram of a structure of an access network device according to an embodiment of this application; and
FIG. 13 is a schematic diagram of a structure of a communication apparatus according to an embodiment of this application.

### DESCRIPTION OF EMBODIMENTS

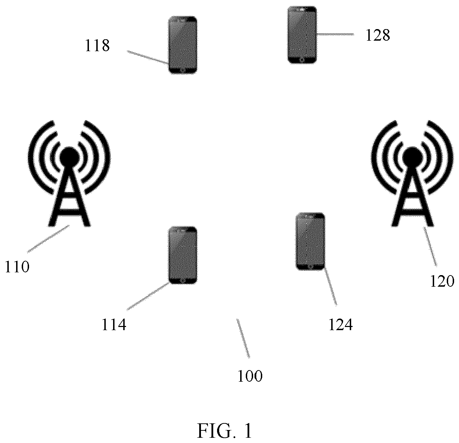

A method and an apparatus provided in embodiments of this application may be applied to a communication system. FIG. 1 is a schematic diagram of a structure of a communication system. The communication system 100 includes one or more access network devices (an access network device 110 and an access network device 120 shown in the figure) and one or more terminals that communicate with the one or more access network devices. A terminal 114 and a terminal 118 shown in FIG. 1 communicate with the access network device 110, and a terminal 124 and a terminal 128 shown in FIG. 1 communicate with the access network device 120. It may be understood that the access network device and the terminal may also be referred to as communication devices.

The method and the apparatus provided in embodiments of this application may be used in various communication systems, for example, a 4th generation (4th generation, 4G) communication system, a 4.5G communication system, a 5G communication system, a system integrating a plurality of communication systems, or a future evolved communication system (for example, a 5.5G communication system or a 6G communication system). The various communication systems are, for example, a long term evolution (long term evolution, LTE) system, a new radio (new radio, NR) system, a wireless fidelity (wireless-fidelity, Wi-Fi) system, a 3rd generation partnership project (3rd generation partnership project, 3GPP)-related communication system, and another communication system of this type.

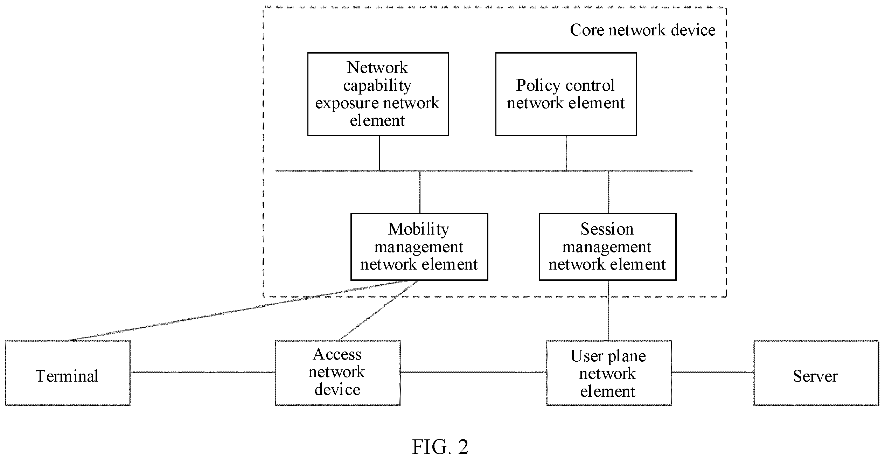

The method and the apparatus provided in embodiments of this application may be applied to architectures of a plurality of communication systems. FIG. 2 is a schematic diagram of an architecture of a communication system. In the architecture of the communication system, a terminal accesses a core network through an access network (radio access network, RAN) device. The terminal may establish a connection to a data network (data network, DN) or a server in the data network through an access network and the core network. The data network may include, for example, an operator service, an internet (Internet), a third-party service, or the like. In the 4G communication system, the connection may be a packet data network connection (packet data network connection, PDN connection) or a bearer. In the 5G communication system, the connection may be a protocol data unit session (protocol data unit session, PDU Session). In the future communication system such as the 6th generation (6th generation, 6G) communication system, the connection may be a PDU session, a PDN connection, or another similar concept. This is not limited in embodiments of this application. In embodiments of this application, the connection established between the terminal and the data network or the server may also be referred to as a session.

The access network device in this application may be any device having a wireless transceiver function, and includes but is not limited to: an evolved NodeB (NodeB or eNB or e-NodeB, evolved NodeB) in LTE, a gNodeB (gNodeB or gNB) or a transmission reception point (transmission receiving point/transmission reception point, TRP) in NR, a future evolved 3GPP base station, an access node in a Wi-Fi system, a wireless relay node, a wireless backhaul node, a core network device, or the like. The base station may be a macro base station, a micro base station, a picocell base station, a small cell, a relay station, a balloon station, or the like. A plurality of base stations may support the foregoing networks using a same technology, or may support the foregoing networks using different technologies. The base station may include one or more co-site or non-co-site TRPs. Alternatively, the access network device may be a server (for example, a cloud server), a radio controller in a cloud radio access network (cloud radio access network, CRAN) scenario, a central unit (central unit, CU), and/or a distributed unit (distributed unit, DU). Alternatively, the access network device may be a server, a wearable device, a machine-to-machine communication device, a vehicle-mounted device, a smart screen, or the like. The following uses an example in which the access network device is a base station for description. The plurality of access network devices may be base stations of a same type, or may be base stations of different types. The base station may communicate with the terminal device, or may communicate with the terminal device through a relay station. The terminal device may communicate with a plurality of base stations using different technologies. For example, the terminal device may communicate with a base station supporting an LTE network, or may communicate with a base station supporting a 5G network, or may support dual connections to a base station in an LTE network and a base station in a 5G network.

The terminal device in this application is a device having a wireless transceiver function, and may be deployed on land, including an indoor or outdoor device, a hand-held device, a wearable device, or a vehicle-mounted device; or may be deployed on a water surface (for example, on a ship); or may be deployed in air (for example, on an airplane, a balloon, and a satellite). The terminal may be a mobile phone (mobile phone), a tablet computer (Pad), a computer having a wireless transceiver function, a virtual reality (virtual reality, VR) terminal device, an augmented reality (augmented reality, AR) terminal device, a terminal in industrial control (industrial control), a vehicle-mounted terminal device, a terminal in self driving (self driving), a terminal in assisted driving, a terminal in telemedicine (telemedicine), a terminal in a smart grid (smart grid), a terminal in transportation safety (transportation safety), a terminal in a smart city (smart city), a terminal in a smart home (smart home), or the like. An application scenario is not limited in embodiments of this application. The terminal sometimes may also be referred to as a terminal device, user equipment (user equipment, UE), an access terminal device, a vehicle-mounted terminal, an industrial control terminal, a LTE unit, a LTE station, a mobile station, a remote station, a remote terminal device, a mobile device, a UE terminal device, a wireless communication device, a machine terminal, a UE agent, a UE apparatus, or the like. The terminal may be fixed or mobile.

By way of an example but not a limitation, the terminal in this application may be a wearable device. The wearable device may also be referred to as a wearable intelligent device, and is a general term of wearable devices, such as glasses, gloves, watches, clothes, and shoes, that are intelligently designed and developed for daily wear by using a wearable technology. The wearable device is a portable device that is directly worn on a body or integrated into clothes or accessories of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, or smart jewelry for monitoring physical signs.

In this application, the terminal may be a terminal in an internet of things (internet of things, IoT) system. IoT is an important component in development of future information technologies. A main technical feature of the IoT is to connect an object to a network by using a communication technology, to implement an intelligent network of human-machine interconnection and thing-thing interconnection. The terminal in this application may be a terminal in machine-type communication (machine-type communication, MTC). The terminal in this application may be a vehicle-mounted module, an onboard component, an automotive chip, or an onboard unit that is built in a vehicle as one or more components or units. The vehicle may implement a method in this application through the vehicle-mounted module, the onboard component, the automotive chip, or the onboard unit that is built in the vehicle. Therefore, embodiments of this application may be applied to an internet of vehicles, for example, vehicle to everything (vehicle to everything, V2X), long term evolution-vehicle (long term evolution-vehicle, LTE-V), and vehicle to vehicle (vehicle to vehicle, V2V).

Alternatively, the terminal in this application may be a VR terminal, an AR terminal, or an MR terminal. The VR terminal, the AR terminal, and the MR terminal each may be referred to as an XR terminal. For example, the XR terminal may be a head-mounted device (for example, a helmet or glasses), or may be an all-in-one machine, or may be a television, a display, an automobile, a vehicle-mounted device, a tablet, a smart screen, a holographic projector, a video player, a remote control robot, a tactile internet terminal, or the like. The XR terminal can present XR data to a user, and the user can experience diversified XR services by wearing or using the XR terminal. The XR terminal may access a network in a wireless or wired manner, for example, access a network through a Wi-Fi or 5G system.

The core network device in this application may include a mobility management network element, a session management network element, and a user plane network element. Optionally, the core network device may further include a network capability exposure network element and/or a policy control network element. Corresponding descriptions are provided below.

The mobility management network element is mainly used for mobility management in a mobile network, for example, user location update, registration network of a user, and user switching. In a 4G communication system, the mobility management network element may be a mobility management entity (mobility management entity, MME). In a 5G communication system, the mobility management network element may be an access and mobility management function (access and mobility management function, AMF).

The session management network element is mainly used for session management in a mobile network, for example, session establishment, modification, and release. A specific function is, for example, allocating an internet protocol (internet protocol, IP) address to a user, or selecting a user plane network element that provides a packet forwarding function. In the 4G communication system, the session management network element may be a serving gateway control plane (serving gateway control plane, SGW-C), a packet data network gateway control plane (packet data network gateway control plane, PGW-C), or a network element in which an SGW-C and a PGW-C are co-deployed. In the 5G communication system, the session management network element may be a session management function (session management function, SMF).

The user plane network element is mainly configured to forward a user packet according to a routing rule of the session management network element. In the 4G communication system, the user plane network element may be a serving gateway user plane (serving gateway user plane, SGW-U), a packet data network gateway user plane (packet data network gateway user plane, PGW-U), or a network element in which an SGW-U and a PGW-U are co-deployed. In the 5G communication system, the user plane network element may be a user plane function (user plane function, UPF) network element.

The policy control network element includes a user subscription data management function, a policy control function, a charging policy control function, quality of service (quality of service, QoS) control, and the like. In the 4G communication system, the policy control network element may be a policy and charging rules function (policy and charging rules function, PCRF). In the 5G communication system, the policy control network element may be a policy control function (policy control function, PCF).

The network capability exposure network element is mainly configured to expose a capability of a communication system to a third-party, an application service function, and the like, and transfer information between the third-party, the application server, and the communication system. In the 4G communication system, the network capability exposure network element may be a service capability exposure function (service capability exposure function, SCEF). In the 5G communication system, the network capability exposure network element may be a network exposure function (network exposure function, NEF).

In a future communication system such as a 6G communication system, the foregoing network element or device may still use a name of the network element or device in the 4G or 5G communication system, or may have another name. Functions of the foregoing network element or device may be completed by one independent network element, or may be jointly completed by several network elements. This is not limited in embodiments of this application.

During actual deployment, network elements in a core network may be deployed on a same physical device or different physical devices. For example, in a possible deployment, an AMF and an SMF may be deployed on a same physical device. For another example, a network element in a 5G core network and a network element in a 4G core network may be deployed on a same physical device.

During actual deployment, the network elements in the core network may be co-deployed. For example, the mobility management network element and the session management network element may be co-deployed. For another example, the session management network element and the user plane network element may be co-deployed. When two or more network elements are co-deployed, interaction between the two or more network elements provided in this application becomes an internal operation of the co-deployed network element, or may be omitted.

In comparison with a core network of the 4G communication system, a core network of the 5G communication system uses an architecture in which a control plane is separated from a user plane and a service-based architecture. It may be understood that the solutions in this application are not only applicable to the 5G communication system, but also applicable to an evolved 4G communication system, a future 6G communication system, or the like. A network to which the solutions of this application are applicable may use the architecture in which the control plane is separated from the user plane, or may use an architecture in which the control plane and the user plane are integrated. The network to which the solutions of this application are applicable may use the service-based architecture, or may use a non-service-based architecture.

It may be understood that, with network evolution, names of the foregoing network elements may change, and functions of the network elements may also be combined, separated, or even changed. However, these changes do not mean that the network elements depart from the application scope of the solutions of this application.

Signaling transmission between a terminal device and a core network device, or between an access network device and a core network device, or between different functional network elements in an access network device is exchanged through an interface of a protocol stack. The interface of the protocol stack mainly includes:
N1 interface: is a signaling plane interface between the terminal device and a mobility management network element of the core network device.
N2 interface: is a signaling plane interface between the access network device and a mobility management network element of the core network device.
N3 interface: is an interface between the access network device and a user plane network element of the core network device, and is mainly configured to transmit uplink and downlink user plane data between the access network device and the user plane network element.
N4 interface: is an interface between a session management network element and the user plane network element of the core network device, and is configured to transmit control plane information between the session management network element and the user plane network element.

During video or audio data transmission, a packet header part in each packet may carry a protocol header, to describe a protocol supported during data transmission. The following uses an example for description.

UDP protocol: A full name is a user datagram protocol (User Datagram Protocol). The UDP protocol is a connectionless transport layer protocol that provides a simple but unreliable transaction-oriented information transmission service.

RTP protocol: A full name is a real-time transport protocol (Real-time Transport Protocol). RTP is used to provide an end-to-end real-time transmission service for multimedia data such as a voice, an image, and a fax in an IP network. The RTP provides time information and stream synchronization for end-to-end real-time transmission, and is mainly used to transmit real-time data in a unicast or multicast network.

In a wireless communication network, an XR technology has advantages such as multiple perspectives and strong interactivity, can provide a brand-new experience for a user, and has great application value and commercial potential. XR includes technologies, for example, VR, AR, and MR, and can be widely applied to many fields, for example, entertainment, gaming, healthcare, advertising, industry, online education, and engineering. The VR technology is mainly to render visual and audio scenarios to simulate sensory stimulation of vision and audio in the real world to a user as much as possible. The VR technology usually requires the user to wear an XR terminal (for example, a head-mounted device) to simulate vision and/or hearing of the user. The VR technology may further perform action tracking on the user, to update simulated visual and/or auditory content in a timely manner. The AR technology is mainly to provide additional visual and/or auditory information or manually generated content in a real environment perceived by the user. The user may directly (where for example, sensing, processing, and rendering are not performed) or indirectly (where for example, transfer is performed through a sensor or the like) perceive the real environment, and further perform enhancement processing. The MR technology is to insert some virtual elements into a physical scenario, to provide an immersive experience that these elements are a part of a real scenario for the user. The network device may process and transmit data (which may be referred to as XR data) generated by the XR service. For example, the network device in cloud may perform rendering and coding (for example, source coding) on XR source data, and transmit the XR data to the XR terminal through the network device in the core network and/or the access network. The XR terminal provides diversified XR experiences (for example, an immersive experience, a visual experience, an interaction experience, or a device experience) for the user by processing the XR data. The XR experience is evaluated from a plurality of different evaluation dimensions, for example, including one or more types of the following evaluation dimensions: picture definition, picture smoothness, picture distortion, picture stereoscopy, picture letter boxing, picture ghosting, sound quality, a sound effect, a field of view, lagging, screen blurring, dizziness, audio and video synchronization, interaction freedom, an interaction operation response speed, interaction operation precision, an interaction content loading speed, terminal wearing comfort, terminal wearing fatigue, a terminal battery life, terminal portability, terminal visual impairment friendliness, or the like.

An embodiment of this application provides a communication method for uplink transmission of XR data. In the method, integrity transmission is performed on data that has a synchronization requirement or an internal association dependency relationship, to meet the synchronization requirement between data, so that transmission efficiency of an XR service is improved.

In this application, data integrity transmission may be understood as that two or more pieces of data are transmitted as a whole. There may be a plurality of different understandings of an integrity object.

For example, the integrity object may be content (content), namely, content integrity. There is an association relationship between content in a plurality of different dimensions (for example, audio and video in the XR service). Therefore, integrity transmission is performed on a plurality of pieces of data corresponding to the content in the plurality of dimensions. For example, there is an association relationship between a plurality of pieces of data corresponding to content of one picture frame, there is an association relationship between basic layer data or enhancement layer data corresponding to content of one picture frame, and there is an association relationship between picture frame data and audio data.

For another example, the integrity obj ect may alternatively be a task, an event, an object, or a type, namely, task integrity, event integrity, object integrity, or type integrity. There is an association relationship between a plurality of pieces of data of a same task, a same event, a same object, or a same type. For example, for a tactile internet, one or more pieces of information such as action information, tactile information, a picture frame, or audio information may be used as data of a same task, a same event, a same object, or a same type. The data of the same task, the same time, the same object, or the same type may belong to a same data unit. In this way, integrity transmission is performed on the plurality of pieces of data of the same task, the same event, the same object, or the same type.

It may be understood that integrity transmission and the integrity object in this application may alternatively have other descriptions. For example, the integrity transmission may alternatively be described as task-driven transmission, event-based transmission, object-oriented transmission, or the like, and all of these types of transmission fall within the scope of this application.

In this application, for uniform description, the integrity object described above is represented as a data unit, and any to-be-transmitted packet in the data unit or any packet in a data unit associated with another dimension is represented as first information. It may be understood that one data unit may include one or more pieces of first information.

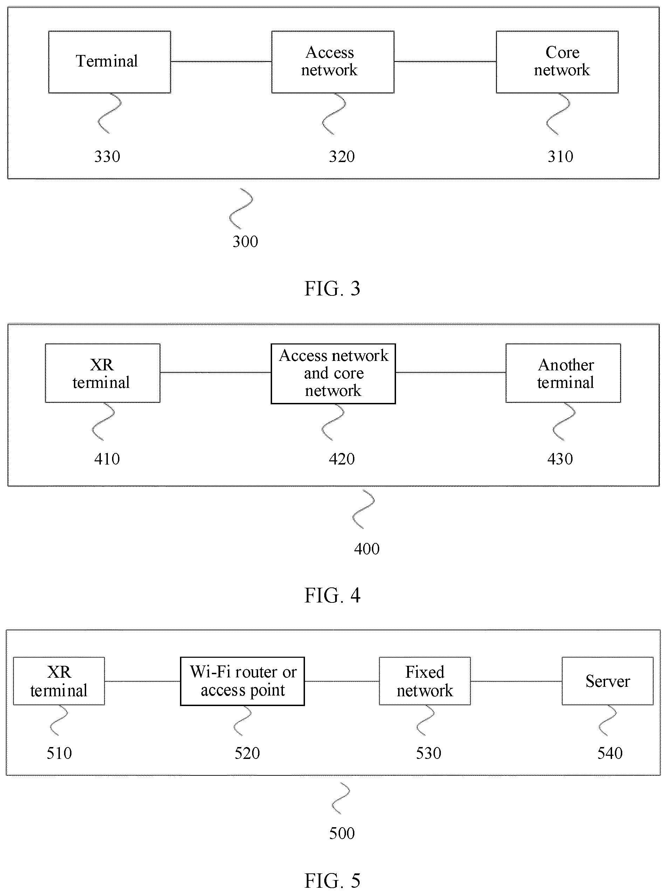

Embodiments provided in this application are applicable to a plurality of different scenarios. For example, FIG. 3 to FIG. 5 are schematic diagrams of several scenarios to which embodiments of this application are applicable.

FIG. 3 is a schematic diagram of a scenario to which an embodiment of this application is applicable. FIG. 3 illustrates a system 300, including a core network 310, an access network 320 (where the core network and the access network may be a transmission network 320 for short, for example, an LTE, a 5G network, or a 6G network), and an XR terminal 330. The XR terminal may encode/decode and render XR source data, the transmission network 320 may be configured to transmit XR data, and the XR terminal 330 provides diversified XR experiences for a user by processing the XR data. It may be understood that another apparatus may be further included between the transmission network 320 and the XR terminal 330. For example, another terminal (for example, a mobile phone, a notebook computer, or an automobile) and/or a network device (for example, a relay, a Wi-Fi router, or a Wi-Fi access point) may be further included. The XR terminal 330 obtains the XR data from the transmission network 320 through another terminal and/or network device.

FIG. 4 is a schematic diagram of another scenario to which an embodiment of this application is applicable. FIG. 4 illustrates a system 400, including an XR terminal device 410, a core network and an access network 420 (which may be a transmission network 420 for short, for example, an LTE, a 5G network, or a 6G network), and another terminal device 430. The another terminal device 430 is a terminal device other than the XR terminal device 410. The another terminal device 430 may be an XR terminal device, or may be a common terminal device (which may also be referred to as a non-XR terminal device). The XR terminal device 410 may transmit data to the another terminal device 430 through the transmission network 420. For example, in a tactile internet, the XR terminal device 410 may be a remote control robot or a remote operator in a controlled domain, and the another terminal device 430 may be a tactile user and/or a manual system interface in a primary domain. The XR terminal device 410 in the primary domain transmits data to the another terminal device 430 in the controlled domain through the transmission network 420, to implement remote control on the another terminal device 430.

FIG. 5 is a schematic diagram of another scenario to which an embodiment of this application is applicable. FIG. 5 illustrates a system 500, including an XR terminal device 510, a Wi-Fi router or an access point 520, a fixed network 530, and a server 540. The XR terminal device 510 may encode/decode and render XR source data, and transmit XR data to the server 540 through the Wi-Fi apparatus 520 and the fixed network 530.

The following describes in detail the technical solutions of this application by using specific embodiments with reference to the accompanying drawings. The following embodiments and implementations may be combined with each other. A same or similar concept or process may not be described again in some embodiments. It should be understood that the functions explained in this application may be implemented by using an independent hardware circuit, software running in combination with a processor/microprocessor or a general-purpose computer, an application-specific integrated circuit, and/or one or more digital signal processors. When described as a method, this application may alternatively be implemented in a computer processor and a memory coupled to the processor.

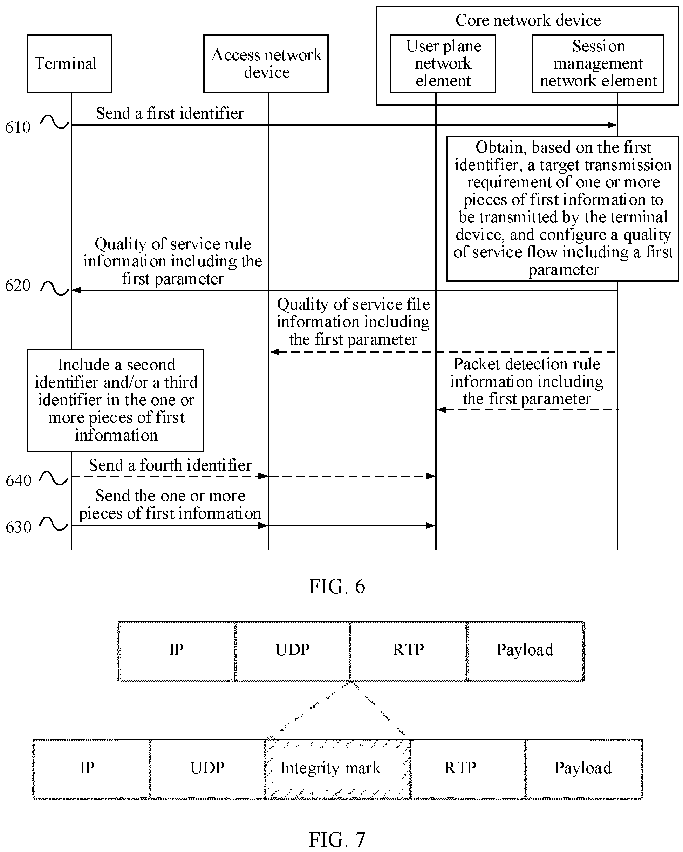

FIG. 6 is a schematic diagram of interaction of a communication method 600 according to an embodiment of this application. In FIG. 6, an example in which a core network device, an access network device, and a terminal device are used as execution bodies illustrated for the interaction is used to illustrate the communication method. However, this application does not limit the execution body illustrated for the interaction. For example, the core network device in FIG. 6 may alternatively be a chip, a chip system, or a processor that supports the core network device in implementing the method, or a functional network element in a core network, for example, a session management network element and/or a user plane network element, or a chip, a chip system, or a processor that supports the session management network element and/or the user plane network element in implementing the method. The access network device in FIG. 6 may alternatively be a chip, a chip system, or a processor that supports the access network device in implementing the method. The terminal device in FIG. 6 may alternatively be a chip, a chip system, or a processor that supports the terminal device in implementing the method. The method 600 illustrated in FIG. 6 includes a part 610 to a part 640. According to the method, integrity transmission can be performed on first information that has a synchronization requirement or a dependency relationship, to meet the synchronization requirement between the first information, so that uplink transmission efficiency of an XR service is improved. The following describes the method 600 provided in this embodiment of this application.

610: The terminal device sends a first identifier to the core network device, where the first identifier indicates a transmission requirement of the terminal device. Correspondingly, the core network device receives the first identifier.

Specifically, the terminal device may send a first request including the first identifier to the core network device. Correspondingly, the core network device receives the first request. The terminal device establishes a connection to the core network device by using the first request. The first request may be a protocol data unit (Protocol Data Unit, PDU) session establishment request (PDU session establishment request) sent by the terminal device. After a PDU session between the terminal device and the core network device is established, the core network device configures a quality of service flow for the terminal device and/or the access network device, to perform data transmission between the terminal device and the access network device and/or the core network device.

Then, the core network device obtains, based on the first identifier, a target transmission requirement of a data unit to be transmitted by the terminal device. Optionally, the target transmission requirement includes an integrity transmission requirement. The first information in the data unit that has the integrity transmission requirement is subsequently considered as a whole by the terminal device for transmission. It may be understood that a specific name of the integrity transmission requirement is not limited in this embodiment of this application. The integrity transmission requirement is merely a possible name. Any other requirement name that can reflect the foregoing function should be understood as the integrity transmission requirement in the solution of this application, for example, an overall transmission requirement or an overall transmission request.

In a possible implementation, in a process of establishing the connection between the terminal device and the core network device by using the first request, the session management network element obtains the first identifier sent by the terminal device, and further obtains the target transmission requirement, of the data unit, that is indicated by the first identifier.

620: The terminal device receives a first parameter from the core network device, where the first parameter indicates that the quality of service flow meets the transmission requirement.

Specifically, the core network device obtains, based on the received first identifier, the target transmission requirement of the data unit to be transmitted by the terminal device, to configure the first parameter. The first parameter is determined based on the first identifier, and indicates that the quality of service flow meets the target transmission requirement. Optionally, the first parameter may be a parameter corresponding to the target transmission requirement, for example, an integrity transmission (Integrated transmission) parameter.

In another possible implementation, the core network device establishes a first connection to the terminal based on the first request from the terminal device. When the first connection is established, the core network device configures the quality of service flow based on the first identifier, namely, the target transmission requirement, carried in the first request. The first connection may be a session established between the core network device and the terminal device, for example, a protocol data unit session (PDU Session), another radio bearer, or another similar concept. This is not limited in this embodiment of this application.

It may be understood that a specific name of the integrity transmission parameter is not limited in this embodiment of this application. The integrity transmission parameter is merely a possible name. Any other parameter or information that can implement the foregoing function should be understood as the integrity transmission parameter in the solution of this application. It may be understood that, in this embodiment of this application, the integrity transmission parameter is not limited to indicate a guaranteed mechanism attribute of the corresponding quality of service flow. The quality of service flow may be a quality of service flow that supports a guaranteed bit rate (Guaranteed Bit Rate, GBR), a quality of service flow that supports a non-guaranteed flow bit rate (Non-GBR), or an inference-type quality of service flow.

The core network device sends first configuration information of the quality of service flow to the terminal device, and the terminal device receives the first configuration information of the quality of service flow, where the first configuration information may be a quality of service rule (QoS rule). For example, the core network device sends the quality of service rule of the quality of service flow to the terminal device, where the quality of service rule includes the first parameter.

In another possible implementation, the core network device establishes a first connection to the terminal device through the session management network element, and configures the quality of service flow having the target transmission requirement when the first connection is established, where the first configuration information of the quality of service flow includes the first parameter. Correspondingly, the terminal device receives the first configuration information of the quality of service flow. For example, the session management network element in the core network device sends the quality of service rule (QoS rule) of the quality of service flow to the terminal device, where the quality of service rule includes the first parameter.

In this implementation of this application, a transmission manner of the quality of service rule between the core network device and the terminal device is not limited in this embodiment. For example, the quality of service rule may be sent or configured by the core network device for the terminal device by using signaling, or the quality of service rule may be obtained through derivation by the terminal device by using a reflective QoS mechanism. For another example, the session management network element in the core network device sends the quality of service rule to the terminal device through an N1 interface; or the session management network element transmits the quality of service rule to a mobility management network element, and the mobility management network element sends the quality of service rule to the terminal device through an N1 interface.

Optionally, the quality of service rule in this application may further include one or more types of the following information: information such as indication information of whether the QoS rule is a default QoS rule (indication of whether the QoS rule is the default QoS rule), a QoS rule identifier (QoS rule identifier, QRI), a QoS flow identifier (QoS flow identifier, QFI), a set of packet filters (a set of packet filters), or a precedence value (precedence value).

The terminal device receives the quality of service rule sent by the core network, and learns, based on the first parameter, that the quality of service flow configured by the core network device meets the transmission requirement. In a subsequent procedure, a plurality of pieces of first information may be transmitted as a whole, so that transmission efficiency of an uplink XR service is improved.

Optionally, in this embodiment of this application, in addition to sending the first parameter to the terminal device, the core network device also sends the first parameter to the access network device or the user plane network element. Specifically, descriptions are provided below.
1. In a possible implementation, the core network device sends second configuration information of the quality of service flow to the access network device, and the access network device receives the second configuration information of the quality of service flow, where the second configuration information may be a quality of service profile (QoS profile). For example, the core network device sends the quality of service profile of the quality of service flow to the access network device, where the quality of service profile includes the first parameter.

Specifically, the session management network element sends the second configuration information of the quality of service flow to the access network device, and the access network device receives the second configuration information of the quality of service flow.

A transmission manner of the second configuration information between the core network device and the access network device is not limited in this embodiment. For example, the session management network element sends the second configuration information to the access network device through an N2 interface. Alternatively, the session management network element transmits the second configuration information to the mobility management network element, and the mobility management network element sends the second configuration information to the access network device through an N2 interface.

Optionally, the second configuration information in this application may further include one or more types of the following information: a 5G QoS identifier (5G QoS identifier) indicating 5G QoS attribute information, allocation and retention priority (allocation and retention priority, ARP) information, guaranteed flow bit rate (guaranteed flow bit rate, GFBR) information, maximum flow bit rate (maximum flow bit rate, MFBR) information, notification control information, maximum packet loss rate (maximum packet loss rate, MPLR) information, or reflective QoS attribute (reflective QoS attribute, RQA) information.

Optionally, the 5G QoS attribute information in this application may further include one or more types of the following information: resource type information, priority information, packet delay budget (packet delay budget, PDB) information, packet error rate (packet error rate, PER) information, average window information, or maximum data burst information.

In a possible embodiment, if the second configuration information in this application includes the 5G QoS attribute information, the first parameter may alternatively be included in the 5G QoS attribute information.

The access network device learns, based on the second configuration information, that the quality of service flow configured by the core network device meets the transmission requirement. When scheduling an uplink resource for the terminal device, the access network device preferentially schedules the uplink resource to a data unit mapped to the quality of service flow, to ensure that a plurality of pieces of first information belonging to the data unit are considered as a whole for transmission. This improves the transmission efficiency of the uplink XR service.

2. In another possible implementation, the core network device sends third configuration information of the quality of service flow to the user plane network element UPF, and the user plane network element receives the third configuration information of the quality of service flow, where the third configuration information may be a packet detection rule (Packet Detection Rule, PDR). For example, the core network device sends the packet detection rule of the quality of service flow to the user plane network element, where the packet detection rule includes the first parameter.

Specifically, the core network device sends the third configuration information of the quality of service flow to the user plane network element through the session management network element, where the third configuration information may be the packet detection rule.

A transmission manner of the third configuration information between the session management network element and the user plane network element is not limited in this embodiment. For example, the session management network element sends the third configuration information to the user plane network element through an N4 interface.

Optionally, in this application, when the first connection established between the core network device and the terminal device is a protocol data unit session, and a type of the protocol data unit session is an internet protocol version 4 (Internet Protocol Version 4, IPv4), internet protocol version 6 (Internet Protocol Version 6, IPv6), or IPv4v6 type, the third configuration information may further include one or more types of the following information:
- core network tunnel information (CN tunnel info);
- a network instance (Network instance);
- a QoS flow identifier (QFI);
- an IP packet filter set (IP Packet Filter Set); or
- an application ID, where the application identifier is an index of an application detection rule set configured in the UPF.

When the first connection established between the core network device and the terminal device is a protocol data unit session, and a type of the protocol data unit session is an ethernet type, the third configuration information may further include one or more types of the following information:
- core network tunnel information (CN tunnel info);
- a network instance (Network instance);
- a QoS flow identifier (QFI);
- an ethernet packet filter set (Ethernet Packet Filter Set).

The user plane network element learns, based on the third configuration information, that the quality of service flow configured by the core network meets the transmission requirement. When the user plane network element receives a plurality of pieces of first information mapped by the terminal device to the quality of service flow, it may be understood that the plurality of pieces of first information are considered as a whole for transmission, to schedule a radio bearer for the plurality of pieces of first information. This improves data transmission efficiency.

In a possible embodiment, if there is only one piece of first information in this application, the foregoing process of 610 and 620 is still applicable to the terminal device. In the foregoing process, the core network device configures, for the first information to be sent by the terminal device, the quality of service flow that meets the transmission requirement, to improve transmission efficiency of the first information of the terminal device.

630: The terminal device sends the first information to the access network device based on the quality of service flow. Correspondingly, the access network device receives the first information from the terminal device. The first information includes a second identifier.

In this application, definition of the data unit and the first information has been specifically described above. It may be understood that data considered as a whole for transmission is one data unit, and data in the data unit may be divided into one or more packets. Any to-be-transmitted packet or any packet associated with another dimension may be understood as the first information. For example, one data unit includes one or more pieces of first information. When the data unit includes one or more pieces of first information, all the pieces of first information include the second identifier.

In this embodiment, when the data unit having an integrity transmission requirement has two or more pieces of first information, second identifiers are the same in the two or more pieces of first information. It may be understood that the same second identifiers may be implemented in a plurality of manners. For example, presentation manners of the second identifiers may be the same. For example, all the second identifiers are same bits, same index numbers, or same bitmaps. Content indicated may be the same or associated. For example, all the second identifiers indicate same or associated information. Whether the second identifiers need to be the same is not limited in this specification. For example, different second identifiers are respectively bits or index numbers. However, it may be considered that the second identifiers are the same provided that content indicated by the second identifiers is associated information, for example, one or a same data unit, or a plurality of pieces of first information in one data unit.

In a possible implementation, the two or more pieces of first information that have same second identifiers may correspond to data of a same picture frame, and the data of the same picture frame may belong to a same data unit. In this way, data included in a plurality of pieces of first information corresponding to the same picture frame may be subsequently considered as a whole by the terminal device for transmission, to avoid retransmission by the terminal device due to a packet loss in an access network. This improves transmission efficiency of the terminal device.

In another possible implementation, the two or more pieces of first information that have same second identifiers may correspond to data in a same packet group, and the data in the same packet group belongs to a same data unit. In this way, data included in a plurality of pieces of first information corresponding to the same packet group may be subsequently considered as a whole by the terminal device for transmission, to avoid retransmission by the terminal device due to a packet loss in an access network. This improves transmission efficiency of the terminal device.

In another possible implementation, the two or more pieces of first information that have same second identifiers may correspond to a same piece of slice (slice) data or a same piece of tile (tile) data of a picture frame. In this way, the same piece of slice data or the same piece of tile data may be subsequently considered as a whole by the terminal device for transmission, to avoid retransmission by the terminal device due to a packet loss in an access network. This improves transmission efficiency of the terminal device.

In another possible implementation, the two or more pieces of first information that have same second identifiers may correspond to base layer data or enhancement layer data of a same picture frame. The base layer data of the same picture frame is used as an example. The base layer data of the same picture frame may belong to a same data unit. In this way, data included in a plurality of pieces of first information corresponding to the base layer data of the same picture frame may be subsequently considered as a whole by the terminal device for transmission, to avoid retransmission by the terminal device due to a packet loss in an access network. This improves transmission efficiency of the terminal device. Similarly, the enhancement layer data of the same picture frame may belong to a same data unit. In this way, data included in a plurality of pieces of first information corresponding to the enhancement layer data of the same picture frame may be subsequently considered as a whole by the terminal device for transmission.

In another possible implementation, the two or more pieces of first information that have same second identifiers may correspond to data of a picture frame and audio data synchronized with the picture frame. The data of the picture frame and the audio data synchronized with the picture frame may belong to a same data unit. In this way, data included in a plurality of pieces of first information corresponding to the data of the picture frame and the audio data synchronized with the picture frame may be subsequently considered as a whole by the terminal device for transmission. This improves a user experience of audio and video synchronization.

In another possible implementation, the two or more pieces of first information that have same second identifiers may correspond to data of a same task, a same event, a same object, or a same type. For example, for a tactile internet, one or more pieces of information such as action information, tactile information, a picture frame, or audio information may be used as the data of the same task, the same event, the same object, or the same type, and the data of the same task, the same time, the same object, or the same type may belong to a same data unit. In this way, data included in a plurality of pieces of first information corresponding to the data of the same task, the same event, the same object, or the same type may be subsequently considered as a whole by the terminal device for transmission, to avoid retransmission by the terminal device due to a packet loss in an access network. This improves transmission efficiency of the terminal device.

When the data unit having the integrity transmission requirement has only one piece of first information, the first information is transmitted as a whole, and the second identifier may still be carried in the first information.

The second identifier identifies that the plurality of pieces of first information belong to a same data unit, and may be subsequently considered by the terminal device as a whole for transmission, and the second identifier may be integrity marking information. It may be understood that a specific name of the integrity marking information is not limited in this embodiment of this application. The integrity marking information is merely a possible name. Any other information that can implement the foregoing function should be understood as the integrity marking information in the solution of this application.

Optionally, the second identifier includes a quality of service flow identifier corresponding to the first information during transmission. A plurality of pieces of first information having a same quality of service flow identifier are considered as a whole for transmission.

Optionally, the second identifier may further include marking information of a data unit to which the first information belongs, and two or more pieces of first information having marking information of a same data unit are considered as a whole for transmission.

The marking information of the data unit may be in a plurality of forms, for example:
a quantity of pieces of first information in the data unit;
an identifier of the data unit;
generation time information of the data unit; and
a data volume of the data unit.

Optionally, the quantity of pieces of first information in the data unit may identify a quantity of pieces of first information in the data unit that is considered as a same whole for transmission, and the quantity of pieces of first information in the data unit is integrity quantity identification information. The access network device learns of the quantity of pieces of first information. This helps obtain a transmission status of the first information in a timely manner, and may assist the access network device in adjusting an uplink resource scheduled for the terminal device.

Optionally, the identifier of the data unit may be an identifier of a frame, a slice, or a tile to which the first information in the data unit that is considered as a whole for transmission belongs. The identifier of the data unit is one or more of integrity frame identification information, integrity slice identification information, or integrity tile identification information. The integrity frame identification information identifies the frame to which the data unit considered as a whole for transmission belongs, the integrity slice identification information identifies the slice to which the data unit considered as a whole for transmission belongs, and the integrity tile identification information identifies the tile to which the data unit considered as a whole for transmission belongs. The access network device learns of the identifier of the data unit. This helps obtain a relationship between the plurality of pieces of first information in a timely manner, and may assist the access network device in adjusting the uplink resource scheduled for the terminal device.

Optionally, the data volume of the data unit may be a total size of the data unit that is considered as a whole for transmission, and the data volume of the data unit is integrity data volume identification information. The access network device learns of the data volume of the data unit. This helps obtain the uplink resource required by the terminal device in a timely manner, and may assist the access network device in adjusting the uplink resource scheduled for the terminal device.

Optionally, the generation time information of the data unit may identify generation time of the data unit that is considered as a whole for transmission. The access network device learns of the generation time information of the data unit. This helps obtain, in a timely manner, time at which the terminal device sends the first information, and may assist the access network device in adjusting the uplink resource scheduled for the terminal device.

In a possible embodiment, the marking information of the data unit may be in one of the foregoing several forms. For example, the marking information of the data unit is the quantity of pieces of first information in the data unit, or the marking information of the data unit is the identifier of the data unit, or the marking information of the data unit is the generation time information of the data unit, or the marking information of the data unit is the data volume of the data unit.

In another possible embodiment, the marking information of the data unit may be a combination of the foregoing several forms.

For example, the marking information of the data unit is the identifier of the data unit and the quantity of pieces of first information in the data unit. The marking information of the data unit can enable the access network device to identify a quantity of pieces of first information included in one data unit and specific pieces of first information belonging to the data unit. For example, data of a picture frame is a data unit, the data of the picture frame is divided into one or more packets, and each packet is one piece of first information. When the terminal device sends a packet, a second identifier in each packet includes a frame identifier and a quantity of packets of the picture frame. When receiving the packet, the access network device detects the second identifier, and may learn of the frame identifier and the quantity of packets of the picture frame, to learn of a data volume of packets transmitted as a whole.

For example, the marking information of the data unit is the identifier of the data unit and the data volume of the data unit, and the marking information of the data unit can enable the access network device to identify the first information that belongs to the data unit and a total data volume of the data unit. The access network device collects statistics on a sum of data volumes of the received first information that includes the second identifier, to learn of the quantity of pieces of first information transmitted as a whole.

It may be understood that the marking information of the data unit in this embodiment of this application is not limited to the foregoing examples, and all other possible forms should be understood as the marking information of the data unit in the solution of this application.

In another possible implementation, the second identifier may be carried in a packet header of the first information, or may be carried in a payload of the first information. For example, as shown in FIG. 7, the second identifier is carried in the packet header of the first information. For example, a field may be newly added between a real-time transport protocol (Real-time Transport Protocol, RTP) and a user datagram protocol (User Datagram Protocol, UDP), and the field is used to store the second identifier. It may be understood that a location of the second identifier in the packet header of the first information is not limited to the listed examples.

In another possible implementation, when one or more pieces of first information in a same data unit carry the second identifier, the terminal device may alternatively add a third identifier to the one or more pieces of first information in the same data unit, where the third identifier identifies any piece of first information in the same data unit. For example, the terminal device sends N first messages, and each first message includes a third identifier. In other words, there are N third identifiers.

The marking information of the third identifier may be in a plurality of forms, for example:
index information of the first information in the data unit to which the first information belongs;
an identifier of the first information; and
a data volume of the first information.

The third identifier carried in the first information may be one of the foregoing several forms or a combination of the foregoing several forms. For example, the third identifier is the identifier of the first information and the data volume of the first information, or the third identifier is the index information of the first information in the data unit to which the first information belongs and the data volume of the first information. It may be understood that the third identifier in this embodiment of this application is not limited to the foregoing examples, and all other possible forms should be understood as content of the third identifier in the solution of this application. In a possible implementation, the third identifier may be carried in a packet header of the first information, or may be carried in a payload of the first information. It may be understood that, in this embodiment of this application, a location of the third identifier in the first information is not limited. In another possible implementation, when one data unit has only one piece of first information, the foregoing steps are still applicable. The marking information of the third identifier may be the same as or different from the marking information of the second identifier. When the third identifier is the same as the second identifier, for example, the data volume of the first information is the same as the data volume of the data unit, or the identifier of the first information is the same as the identifier of the data unit, the first information needs to carry only one of the second identifier or the third identifier. When the third identifier is different from the second identifier, for example, the second identifier is the generation time information of the data unit or the quality of service flow identifier, and the third identifier is the identifier of the first information or the data volume of the first information, the first information may carry the second identifier and the third identifier.

In this application, the terminal device sends the first information based on the quality of service flow configured by the network device. Correspondingly, the access network device receives the first information based on the quality of service flow. Optionally, the access network device sends the received first information to the user plane network element.

Optionally, the access network device and/or the user plane network element detect/detects the received first information, to obtain the second identifier, and consider/considers, based on the second identifier, two or more pieces of received first information that have same second identifiers as a whole.

In a possible implementation, the access network device and/or the UPF detect/detects the received first information, to obtain the quantity of pieces of first information carried in the second identifier. If the quantity of pieces of first information received by the access network device and/or the user plane network element is different from the quantity of pieces of first information carried in the second identifier, the access network device and/or the user plane network element actively discard/discards the received first information.

In a possible implementation, the access network device and/or the user plane network element detect/detects the received first information, to obtain the identifier of the data unit carried in the second identifier. The access network device and/or the user plane network element determine/determines, based on the identifier of the data unit, data that needs to be preferentially transmitted by the terminal, and may allocate an uplink transmission resource to the terminal device, to ensure that data belonging to a same data unit is transmitted as soon as possible, and ensure that an end-to-end data transmission delay meets a requirement.

In another possible implementation, the access network device and/or the user plane network element detect/detects the received first information, to obtain the data volume of the data unit carried in the second identifier. The access network device and/or the user plane network element determine/determines, based on the data volume of the data unit, data that needs to be preferentially transmitted, and may allocate an uplink transmission resource to the terminal device, to ensure that data belonging to a same data unit is transmitted as soon as possible, and ensure that an end-to-end data transmission delay meets a requirement.

In this embodiment of this application, based on the descriptions of the foregoing steps, after obtaining the second identifier, the access network device may learn of the transmission status of the first information, and further determine whether the uplink resource needs to be adjusted for the to-be-transmitted first information, to improve transmission efficiency of the data unit transmitted as a whole. To further meet the transmission requirement of the data unit transmitted as a whole, the terminal device may send, to the access network device in advance, the marking information of the data unit to which the first information belongs, so that the access network device learns in advance of the marking information of the data unit transmitted as a whole. In this way, the access network device may schedule an appropriate uplink resource for the first information to be transmitted by the terminal device in advance, to ensure uplink transmission efficiency.

Therefore, optionally, in this embodiment of this application, before sending the plurality of pieces of first information, the terminal device sends, to the access network device, the marking information of the data unit to which the plurality of pieces of first information belong. If there is only one piece of first information transmitted as a whole, before sending the first information, the terminal device may also send, to the access network device, the marking information of the data unit to which the first information belongs. To distinguish from the second identifier in the first information, the terminal device sends the foregoing marking information in advance, and the marking information is referred to as fourth identification information.

A specific step is described in step 640 in FIG. 6.

640: The terminal device sends a fourth identifier. Correspondingly, the access network device receives the fourth identifier.

The terminal device sends the fourth identifier to the access network device before sending the one or more pieces of first information.

That the terminal device sends the fourth identifier to the access network device means that the terminal device reports, to the access network device, the second identifier carried in the one or more pieces of first information to be sent by the terminal device. Therefore, it may be understood that the fourth identifier includes all content of the second identifier or some content of the second identifier. According to the foregoing explanations of the content included in the second identifier, it may be understood that the fourth identifier may include the quality of service flow identifier of the one or more pieces of to-be-sent first information during transmission, and/or one or more types of information in the marking information of the data unit to which the one or more pieces of to-be-sent first information belong.

Specifically, the fourth identifier may include the marking information of the data unit to which the one or more pieces of first information to be sent by the terminal device belong. The marking information of the data unit may be in a plurality of forms, and includes one or more types of the following information:
a quantity of pieces of first information in the data unit;
an identifier of the data unit;
generation time information of the data unit; and
a data volume of the data unit.

For specific descriptions of the foregoing information, refer to descriptions of the marking information of the data unit in the part 620 in the foregoing method embodiment. Details are not described herein again.

Correspondingly, after receiving the fourth identifier, the access network device may learn that the one or more pieces of first information to be transmitted by the terminal device are considered as a same whole for transmission. The access network device may schedule, based on the fourth identifier, an uplink transmission resource for the one or more pieces of first information that are to be sent by the terminal device and that are considered as a same whole, to ensure that the terminal device can complete uplink transmission as soon as possible, achieve integrity transmission, and ensure that end-to-end transmission time meets a delay requirement.

Optionally, the fourth identifier may further include the quality of service flow identifier of the foregoing one or more pieces of first information during transmission. After receiving the fourth identifier, the access network device may learn of configuration information of the quality of service flow indicated by the quality of service flow identifier.

Optionally, the fourth identifier may further include group of pictures (Group of Pictures, GoP) information of the data unit to which the one or more pieces of first information belong. The GoP information indicates importance of the data unit. The access network device may schedule, based on the GoP information, more uplink resources for transmission of the data unit, to ensure uplink transmission efficiency of the terminal device.

Optionally, the fourth identifier may further include information about time at which the first piece of first information in the one or more pieces of first information arrives at the access network device, namely, arrival time information of the first piece of first information, and the arrival time information of the first piece of first information may alternatively be information about waiting duration in which the first piece of first information is received by the access network device. After receiving the fourth identifier, the access network device receives the one or more pieces of first information based on a moment indicated by the arrival time information. This improves data receiving efficiency of the access network device.

Optionally, after the access network device receives the fourth identifier, the access network device sends the received fourth identifier to the user plane network element, and the user plane network element learns that the one or more pieces of first information to be sent by the terminal device are considered as a same whole for transmission.

In this embodiment of this application, a transmission manner of the fourth identifier is not limited, and there may be a plurality of manners. Examples are as follows:

In a possible implementation, a radio resource control (radio resource control, RRC) layer of the terminal device sends the fourth identifier. Correspondingly, a radio resource control layer of the access network device receives the fourth identifier.

The RRC layer of the terminal device sends the fourth identifier in a form of RRC signaling. The RRC signaling may separately send the fourth identifier, or the fourth identifier may be sent by using RRC signaling in collaboration with another new element. Therefore, it may be understood that a transmission form of the fourth identifier at the RRC layer is not limited in this embodiment of this application. For example, the fourth identifier is carried in a UE assistance information message (UEAssistanceInformation message).

In another possible implementation, a media access control (media access control, MAC) layer of the terminal device sends the fourth identifier. Correspondingly, a media access control layer of the access network device receives the fourth identifier.

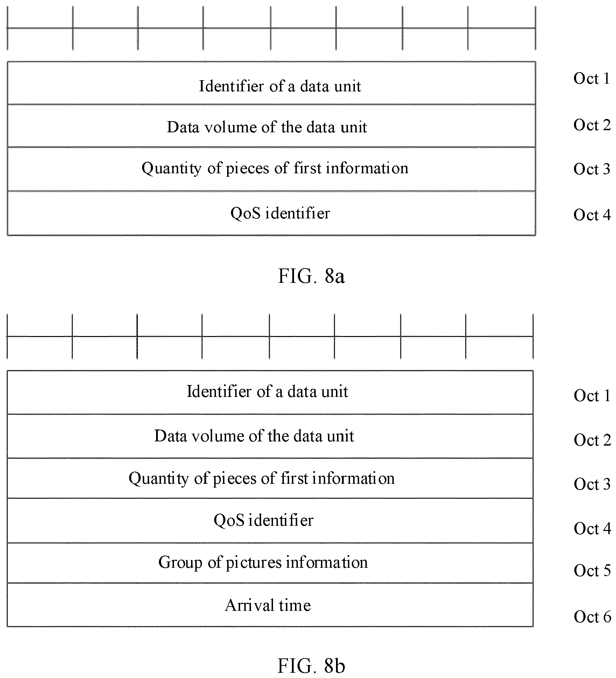

The MAC layer of the terminal device sends the fourth identifier in a form of control element (control element) signaling. For example, the fourth identifier may be an integrity transmission MAC CE. As shown in FIG. 8a, the MAC CE is a possible form of the integrity transmission MAC CE. As shown in FIG. 8b, the MAC CE is another possible form of the integrity transmission MAC CE. It may be understood that the forms of the integrity transmission MAC CE shown in FIG. 8a and FIG. 8b do not cover possible transmission forms of the fourth identifier. Field lengths in the MAC CE shown in FIG. 8a and FIG. 8b do not limit actual field lengths of corresponding fields in the MAC CE, and are merely used as examples for explanation. Therefore, it may be understood that a transport format and a size of the fourth identifier at the MAC layer are not limited in this embodiment of this application.

In another possible implementation, a physical layer of the terminal device sends the fourth identifier. Correspondingly, a physical layer of the access network device receives the fourth identifier.

For example, the fourth identifier may be reported to the access network device in a form of uplink control information (Uplink Control Information, UCI). For example, the fourth identifier is uplink integrity transmission information (Uplink Integrated Transmission Info).

The physical layer of the terminal device sends the fourth identifier in a form of physical uplink control channel data, or sends the fourth identifier in a form of physical uplink shared channel data.

Sending time at which the terminal device sends the fourth identifier may be periodic, or may be aperiodic, or may be before time at which the terminal device sends the one or more pieces of first information that are considered as a same whole for transmission. This is not limited in this embodiment of this application.

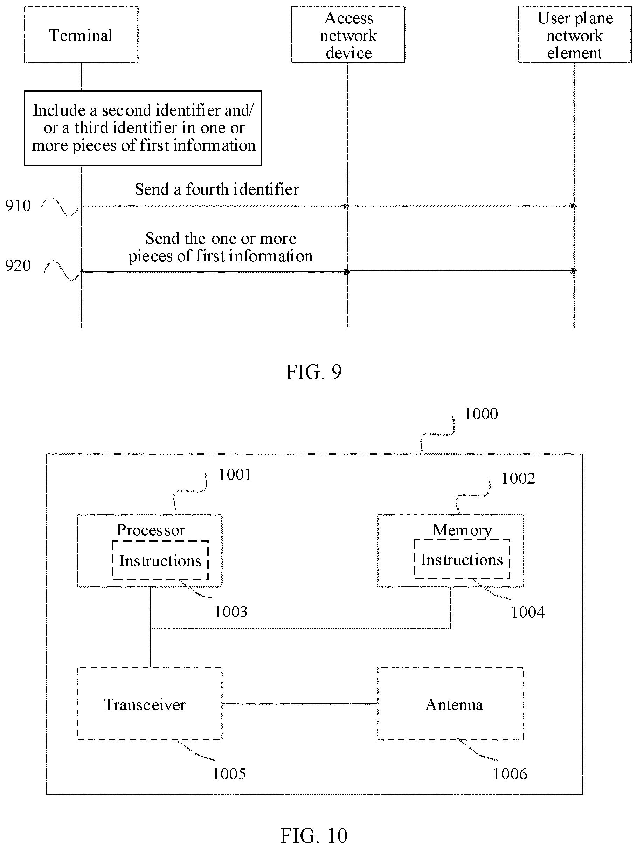

In a possible implementation, the part 610 and the part 620 are not necessary in this application. That is, the terminal device may perform the specific process described in the part 630 and the part 640. The terminal device reports the fourth identifier to the access network device and/or the core network device, so that the access network device and/or the core network device learn/learns of the transmission requirement of the one or more pieces of first information to be transmitted by the terminal device. After receiving the fourth identifier, the access network device and/or the core network device may learn that the one or more pieces of first information to be transmitted by the terminal device are considered as a same whole for transmission. The access network device may schedule, based on the fourth identifier, the uplink transmission resource for the one or more pieces of first information that are to be sent by the terminal device and that are considered as a same whole, to ensure that the terminal device can complete uplink transmission as soon as possible, achieve integrity transmission, and ensure that the end-to-end transmission time meets the delay requirement. A specific implementation is described in FIG. 9.

FIG. 9 is a schematic diagram of interaction of another communication method 900. In FIG. 9, an example in which a user plane network element of a core network device, an access network device, and a terminal device are used as execution bodies illustrated for the interaction is used to illustrate the communication method. However, this application does not limit the execution body illustrated for the interaction. For example, the user plane network element in FIG. 9 may alternatively be a chip, a chip system, or a processor that supports the user plane network element in implementing the method. The access network device in FIG. 9 may alternatively be a chip, a chip system, or a processor that supports the access network device in implementing the method. The terminal device in FIG. 9 may alternatively be a chip, a chip system, or a processor that supports the terminal device in implementing the method. The method 900 illustrated in FIG. 9 includes a part 920 and a part 930. According to the method, integrity transmission can be performed on data or information that has a synchronization requirement or a dependency relationship, to meet the synchronization requirement between the data or information, so that transmission efficiency of an uplink XR service is improved. The following describes the method 900 provided in this embodiment of this application.

910: The terminal device sends a fourth identifier to the access network device. Correspondingly, the access network device receives the fourth identifier.

In this embodiment of this application, the terminal device considers a plurality of pieces of first information that belong to a same data unit as a whole for transmission. In other words, a data unit to be transmitted by the terminal device has an integrity transmission requirement. When the data unit having the integrity transmission requirement has two or more pieces of first information, the terminal device adds second identifiers to all pieces of first information, where the second identifiers are the same in the two or more pieces of first information, and are used to mark that all the pieces of first information belong to a same data unit. The two or more pieces of first information that have same second identifiers are considered by the terminal device as a whole for transmission, so that retransmission by the terminal device due to a packet loss in an access network can be avoided. This improves transmission efficiency of the terminal device.

When the data unit having the integrity transmission requirement has only one piece of first information, the first information is transmitted as a whole, and the second identifier may still be carried in the first information.

For descriptions of the second identifier, a form of the second identifier, and a location of the second identifier in the first information, refer to corresponding descriptions in the part 630 in the foregoing method embodiment. Details are not described herein again.

Before sending the plurality of pieces of first information, the terminal device sends, to the access network device, marking information of the data unit to which the first information belongs, so that the access network device learns in advance of the marking information of the data unit transmitted as a whole. In this way, the access network device may schedule an appropriate uplink resource for the first information to be transmitted by the terminal device in advance, to ensure uplink transmission efficiency. To distinguish from the second identifier in the first information, the terminal device sends the foregoing marking information in advance, and the marking information is referred to as a fourth identifier.

If there is only one piece of first information transmitted as a whole, before sending the first information, the terminal device may also send, to the access network device, the marking information of the data unit to which the first information belongs.

To distinguish from the second identifier in the first information, the terminal device sends the foregoing marking information in advance, and the marking information is referred to as a fourth identifier.

Therefore, that the terminal device sends the fourth identifier to the access network device means that the terminal device reports, to the access network device, the second identifier carried in the one or more pieces of first information to be sent by the terminal device. It may be understood that the fourth identifier includes all content of the second identifier or some content of the second identifier. According to the foregoing explanations of the content included in the second identifier, it may be understood that the fourth identifier may include a quality of service flow identifier of the one or more pieces of to-be-sent first information during transmission, and/or one or more types of information in the marking information of the data unit to which the one or more pieces of to-be-sent first information belong.

Specifically, the fourth identifier may include the marking information of the data unit to which the one or more pieces of first information to be sent by the terminal device belong. The marking information may be in a plurality of forms, and includes one or more types of the following information:
a quantity of pieces of first information in the data unit;
an identifier of the data unit;
generation time information of the data unit; and
a data volume of the data unit.

For specific descriptions of the foregoing information, refer to descriptions of the marking information of the data unit in the part 630 in the foregoing method embodiment. Details are not described herein again.

Correspondingly, after receiving the fourth identifier, the access network device may learn that the one or more pieces of first information to be transmitted by the terminal device are considered as a same whole for transmission. The access network device may schedule, based on the fourth identifier, an uplink transmission resource for the one or more pieces of first information that are to be sent by the terminal device and that are considered as a same whole, to ensure that the terminal device can complete uplink transmission as soon as possible, achieve integrity transmission, and ensure that end-to-end transmission time meets a delay requirement.

The fourth identifier may further include the quality of service flow identifier to which the one or more pieces of first information are mapped. After receiving the fourth identifier, the access network device may learn of configuration information of a quality of service flow indicated by the quality of service flow identifier.

Optionally, the fourth identifier may further include group of pictures (Group of Pictures, GoP) information of the data unit to which the one or more pieces of first information belong. The GoP information indicates importance of the data unit. The access network device may schedule, based on the GoP information, more uplink resources for transmission of the data unit, to ensure uplink transmission efficiency and reliability of the terminal device.

Optionally, the fourth identifier may further include information about time at which the first piece of first information in the one or more pieces of first information arrives at the access network device, namely, arrival time information of the first piece of first information, and the arrival time information of the first piece of first information may alternatively be information about waiting duration in which the first piece of first information is received by the access network device. After receiving the fourth identifier, the access network device receives the one or more pieces of first information based on a moment indicated by the arrival time information. This improves data receiving efficiency of the access network device.

Optionally, after the access network device receives the fourth identifier, the access network device sends the received fourth identifier to the user plane network element, and the user plane network element learns that the one or more pieces of first information to be sent by the terminal device are considered as a same whole for transmission.

In this embodiment of this application, a transmission manner of the fourth identifier is not limited, and there may be a plurality of manners. Examples are as follows:

In a possible implementation, a radio resource control (radio resource control, RRC) layer of the terminal device sends the fourth identifier. Correspondingly, a radio resource control layer of the access network receives the fourth identifier.

The RRC layer of the terminal device sends the fourth identifier in a form of RRC signaling. The fourth identifier may be a separate type of RRC signaling, or the fourth identifier may be a part of existing RRC signaling. Therefore, it may be understood that a transmission form of the fourth identifier at the RRC layer is not limited in this embodiment of this application. For example, the fourth identifier is carried in a UE assistance information message (UEAssistanceInformation message).

In another possible implementation, a media access control (media access control, MAC) layer of the terminal device sends the fourth identifier. Correspondingly, a media access control layer of the access network device receives the fourth identifier.

The MAC layer of the terminal device sends the fourth identifier in a form of control element (control element) signaling. For example, the fourth identifier may be an integrity transmission MAC CE. As shown in FIG. 8a, the MAC CE is a possible form of the integrity transmission MAC CE. As shown in FIG. 8b, the MAC CE is another possible form of the integrity transmission MAC CE. It may be understood that the forms of the integrity transmission MAC CE shown in FIG. 8a and FIG. 8b do not cover possible transmission forms of the fourth identifier. Field lengths in the MAC CE shown in FIG. 8a and FIG. 8b do not limit actual field lengths of corresponding fields in the MAC CE, and are merely used as examples for explanation. Therefore, it may be understood that a transport format and a size of the fourth identifier at the MAC layer are not limited in this embodiment of this application.

In another possible implementation, a physical layer of the terminal device sends the fourth identifier. Correspondingly, a physical layer of the access network device receives the fourth identifier.

For example, the fourth identifier may be reported to the access network device in a form of uplink control information (Uplink Control Information, UCI). For example, the fourth identifier is uplink integrity transmission information (Uplink Integrated Transmission Info).

The physical layer of the terminal device sends the fourth identifier in a form of physical uplink control channel data, or sends the fourth identifier in a form of physical uplink shared channel data.

Sending time at which the terminal device sends the fourth identifier may be periodic, or may be aperiodic, or may be before time at which the terminal device sends the one or more pieces of first information that are considered as a same whole for transmission. This is not limited in this embodiment of this application.

920: The terminal device sends the one or more pieces of first information including the second identifier to the access network device. Correspondingly, the access network device receives the one or more pieces of first information.

Further, in another possible implementation, when one or more pieces of first information in a same data unit carry the second identifier, the terminal device may add a third identifier to the one or more pieces of first information in the same data unit, where the third identifier marks any piece of first information in the same data unit. For example, the terminal device sends N first messages, and each first message includes a third identifier. In other words, there are N third identifiers.

For descriptions of the third identifier, a form of the third identifier, and a location of the third identifier in the first information, refer to corresponding descriptions in the part 630 in the foregoing method embodiment. Details are not described herein again.

In this application, the terminal device sends the first information based on the quality of service flow configured by a network device. Correspondingly, the access network device receives the first information based on the quality of service flow. Optionally, the access network device sends the received first information to the user plane network element.

In a possible implementation, the access network device and/or the user plane network element detect/detects the received first information, to obtain the quantity of pieces of first information carried in the second identifier. If the quantity of pieces of first information received by the access network device and/or the user plane network element is different from the quantity of pieces of first information carried in the second identifier, the access network device and/or the user plane network element actively discard/discards the received first information.

In a possible implementation, the access network device and/or the user plane network element detect/detects the received first information, to obtain the identifier of the data unit carried in the second identifier. The access network device and/or the user plane network element determine/determines, based on the identifier of the data unit, data that needs to be preferentially transmitted by the terminal, and may determine, with reference to the received fourth identifier, whether an uplink transmission resource allocated to the terminal device needs to be adjusted, to ensure that data belonging to a same data unit is transmitted as soon as possible, and ensure that an end-to-end data transmission delay meets a requirement.

In another possible implementation, the access network device and/or the user plane network element detect/detects the received first information, to obtain the data volume of the data unit carried in the second identifier. The access network device and/or the user plane network element determine/determines, with reference to the received fourth identifier based on the data volume of the data unit, data that needs to be preferentially transmitted, and may adjust an uplink transmission resource allocated to the terminal device, to ensure that data belonging to a same data unit is transmitted as soon as possible, and ensure that an end-to-end data transmission delay meets a requirement.

In this embodiment of this application, before sending the one or more pieces of first information, the terminal device sends the fourth identifier to the access network device and/or the user plane network element, so that the access network device and/or the user plane network element obtain/obtains the transmission requirement of the data to be transmitted by the terminal device, and schedule/schedules an appropriate uplink resource for the terminal device in advance; and when receiving the first information, obtain/obtains a transmission status of the first information based on the detected second identifier and/or the detected third identifier. This can adjust the uplink transmission resource for the terminal device in a timely manner. During XR uplink service transmission, according to the implementation method in this application, transmission efficiency of an uplink XR service can be effectively improved, and a use experience of the XR service can be ensured.

FIG. 10 is a schematic diagram of a structure of an apparatus. The apparatus 1000 may be a network device, or may be a terminal device, or may be a chip, a chip system, a processor, or the like that supports a network device in implementing the foregoing methods, or may be a chip, a chip system, a processor, or the like that supports a terminal device in implementing the foregoing methods. The apparatus may be configured to implement the methods described in the foregoing method embodiments. For details, refer to the descriptions in the foregoing method embodiments.

The apparatus 1000 may include one or more processors 1001. The processor 1001 may also be referred to as a processing unit, and may implement a specific control function. The processor 1001 may be a general-purpose processor, a dedicated processor, or the like. For example, the processor 1001 may be a baseband processor or a central processing unit. The baseband processor may be configured to process a communication protocol and communication data. The central processing unit may be configured to control a communication apparatus (for example, a base station, a baseband chip, a terminal device, a terminal device chip, a DU, or a CU), execute a software program, and process data of the software program.

In an optional design, the processor 1001 may alternatively store instructions and/or data 1003, and the instructions and/or data 1003 may be run by the processor, so that the apparatus 1000 performs the methods described in the foregoing method embodiments.

In another optional design, the processor 1001 may include a transceiver unit configured to implement receiving and sending functions. For example, the transceiver unit may be a transceiver circuit, an interface, or an interface circuit. The transceiver circuit, the interface, or the interface circuit configured to implement receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the apparatus 1000 may include a circuit. The circuit may implement a sending, receiving, or communication function in the foregoing method embodiments.

Optionally, the apparatus 1000 may include one or more memories 1002. The memory 1002 may store instructions 1004. The instructions may be run on the processor, so that the apparatus 1000 performs the methods described in the foregoing method embodiments. Optionally, the memory may alternatively store data. Optionally, the processor may alternatively store instructions and/or data. The processor and the memory may be separately disposed, or may be integrated together. For example, the correspondence described in the foregoing method embodiments may be stored in the memory or stored in the processor.

Optionally, the apparatus 1000 may further include a transceiver 1005 and/or an antenna 1006. The processor 1001 may be referred to as a processing unit, and controls the apparatus 1000. The transceiver 1005 may be referred to as a transceiver unit, a transceiver machine, a transceiver circuit, a transceiver apparatus, a transceiver module, or the like, and is configured to implement a transceiver function.

Optionally, the apparatus 1000 in this embodiment of this application may be configured to perform the method described in FIG. 6 or FIG. 9 in embodiments of this application.

The processor and the transceiver described in this application may be implemented in an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like. The processor and the transceiver may alternatively be manufactured using various IC technologies, for example, a complementary metal oxide semiconductor (complementary metal oxide semiconductor, CMOS), an N-channel metal-oxide-semiconductor (n-channel Metal-oxide-semiconductor, NMOS), a positive channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), or gallium arsenide (GaAs).

The apparatus described in the foregoing embodiment may be a network device or a terminal device. However, a scope of the apparatus described in this application is not limited thereto, and a structure of the apparatus may not be limited by that in FIG. 10. The apparatus may be an independent device or may be a part of a large device. For example, the apparatus may be:
(1) an independent integrated circuit IC, a chip, a chip system, or a subsystem;
(2) a set of one or more ICs, where optionally, the IC set may also include a storage component configured to store data and/or instructions;
(3) an ASIC, for example, a modem (MSM);
(4) a module that can be embedded in another device;
(5) a receiver machine, a terminal device, an intelligent terminal device, a cellular phone, a wireless device, a handheld device, a mobile unit, a vehicle-mounted device, a network device, a cloud device, an artificial intelligence device, a machine device, a household device, a medical device, an industrial device, or the like; and
(6) others.

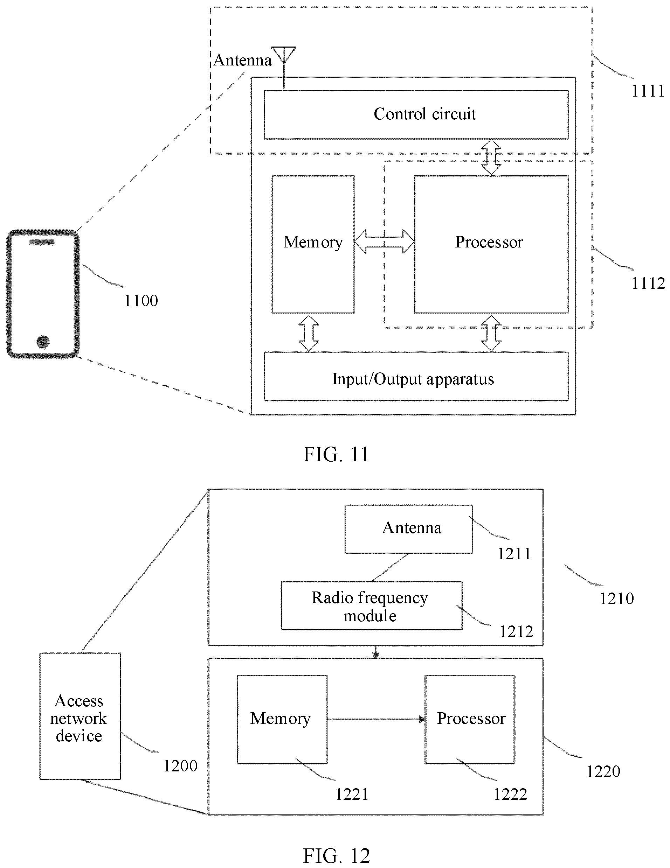

FIG. 11 is a schematic diagram of a structure of a terminal device. The terminal device may be applied to the scenario shown in FIG. 1, FIG. 2, FIG. 3, FIG. 4, or FIG. 5. For ease of description, FIG. 11 shows only main components of the terminal device. As shown in FIG. 11, the terminal device 1100 includes a processor, a memory, a control circuit, an antenna, and an input/output apparatus. The processor is mainly configured to: process a communication protocol and communication data, control the entire terminal device, execute a software program, and process data of the software program. The memory is mainly configured to store the software program and data. The radio frequency circuit is mainly configured to: convert a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user, and output data to the user.

After the terminal device is powered on, the processor may read the software program in a storage unit, parse and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and then sends the radio frequency signal to the outside in a form of an electromagnetic wave through the antenna. When data is sent to the terminal device, the radio frequency circuit receives the radio frequency signal through the antenna. The radio frequency signal is further converted into a baseband signal, and the baseband signal is output to the processor. The processor converts the baseband signal into data, and processes the data.

For ease of description, FIG. 11 shows only one memory and one processor. In an actual terminal device, there may be a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process a communication protocol and communication data. The central processing unit is mainly configured to: control the entire terminal device, execute a software program, and process data of the software program. The processor in FIG. 11 integrates functions of the baseband processor and the central processing unit. A person skilled in the art may understand that the baseband processor and the central processing unit may alternatively be processors independent of each other, and are interconnected by using a technology such as a bus. A person skilled in the art may understand that the terminal device may include a plurality of baseband processors, to adapt to different network standards, the terminal device may include a plurality of central processing units, to enhance a processing capability of the terminal device, and various components of the terminal device may be connected through various buses. The baseband processor may also be expressed as a baseband processing circuit or a baseband processing chip. The central processing unit may also be expressed as a central processing circuit or a central processing chip. The function of processing the communication protocol and the communication data may be built in the processor, or may be stored in the storage unit in a form of a software program, and the processor executes the software program to implement a baseband processing function.

In an example, the antenna and the control circuit that have a transceiver function may be considered as a transceiver unit 1111 of the terminal device 1100, and the processor that has a processing function may be considered as a processing unit 1112 of the terminal device 1100. As shown in FIG. 11, the terminal device 1100 includes the transceiver unit 1111 and the processing unit 1112. The transceiver unit may also be referred to as a transceiver, a transceiver machine, a transceiver apparatus, or the like. Optionally, a component that is in the transceiver unit 1111 and that is configured to implement a receiving function may be considered as a receiving unit, and a component that is in the transceiver unit 1111 and that is configured to implement a sending function may be considered as a sending unit. In other words, the transceiver unit 1111 includes the receiving unit and the sending unit. For example, the receiving unit may also be referred to as a receiver machine, a receiver, a receiving circuit, or the like, and the sending unit may be referred to as a transmitter machine, a transmitter, a transmitting circuit, or the like. Optionally, the receiving unit and the sending unit may be an integrated unit, or may be a plurality of independent units. The receiving unit and the sending unit may be located in one geographical location, or may be distributed in a plurality of geographical locations.

FIG. 12 is a schematic diagram of a structure of an access network device. The access network device may be applied to the scenario shown in FIG. 1, FIG. 2, FIG. 3, FIG. 4, or FIG. 5. For ease of description, FIG. 12 shows only main components of the access network device. As shown in FIG. 12, a base station device includes a processor, a memory, a radio frequency module, and an antenna. The processor is mainly configured to: process a communication protocol and communication data, control the entire terminal device, execute a software program, and process data of the software program. The memory is mainly configured to store the software program and data. The radio frequency module is mainly configured to: convert a baseband signal and a radio frequency signal, and process the radio frequency signal. The antenna is mainly configured to receive and send a radio frequency signal in a form of an electromagnetic wave.

For ease of description, FIG. 12 shows only one memory and one processor. In an actual terminal device, there may be a plurality of processors and memories. The memory may also be referred to as a storage medium, a storage device, or the like. This is not limited in this embodiment of the present invention.

In an example, the antenna and the radio frequency module that have a transceiver function may be considered as a transceiver unit 1210 of the access network device 1200, and the processor and the memory that have a processing function may be considered as a processing unit 1220 of the access network device 1200. As shown in FIG. 12, the access network device 1200 includes the transceiver unit 1210 and the processing unit 1220. The transceiver unit may also be referred to as a transceiver, a transceiver machine, a transceiver apparatus, or the like. Optionally, a component that is in the transceiver unit 1210 and that is configured to implement a receiving function may be considered as a receiving unit, and a component that is in the transceiver unit 1210 and that is configured to implement a sending function may be considered as a sending unit. In other words, the transceiver unit 1210 includes the receiving unit and the sending unit. For example, the receiving unit may also be referred to as a receiver machine, a receiver, a receiving circuit, or the like, and the sending unit may be referred to as a transmitter machine, a transmitter, a transmitting circuit, or the like. Optionally, the receiving unit and the sending unit may be an integrated unit, or may be a plurality of independent units. The receiving unit and the sending unit may be located in one geographical location, or may be distributed in a plurality of geographical locations. The processing unit 1220 is mainly configured to: perform baseband processing, control the access network device, and the like, and is a control center of the access network device. The processing unit 1220 may include one or more boards. The plurality of boards may jointly support a radio access network (for example, a 5G network) having a single access standard, or may separately support radio access networks (for example, an LTE network, a 5G network, or another network) having different access standards. The memory 1221 and the processor 1222 may serve one or more boards. In other words, a memory and a processor may be disposed on each board. Alternatively, a plurality of boards may share a same memory and a same processor. In addition, a necessary circuit may further be disposed on each board.

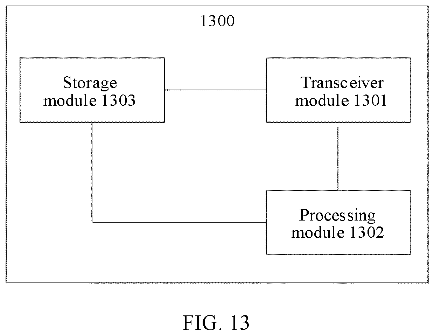

As shown in FIG. 13, another embodiment of this application provides an apparatus 1300. The apparatus may be a terminal device, or may be a component (for example, an integrated circuit or a chip) in the terminal device. Alternatively, the apparatus may be a network device, or may be a component (for example, an integrated circuit or a chip) of the network device. Alternatively, the apparatus may be another communication module, configured to implement the methods in the method embodiments of this application. The apparatus 1300 may include a processing module 1302 (or referred to as a processing unit). Optionally, the apparatus 1300 may further include a transceiver module 1301 (or referred to as a transceiver unit) and a storage module 1303 (or referred to as a storage unit).

In a possible design, one or more modules in FIG. 13 may be implemented by one or more processors, or may be implemented by one or more processors and memories, or may be implemented by one or more processors and transceivers, or may be implemented by one or more processors, memories, and transceivers. This is not limited in this embodiment of this application. The processor, the memory, and the transceiver may be separately disposed, or may be integrated.

The apparatus has a function of implementing the terminal device described in embodiments of this application. For example, the apparatus includes a corresponding module, unit, or means (means) used by the terminal device to perform the steps related to the terminal device that are described in embodiments of this application. The function, unit, or means (means) may be implemented by software or hardware, or may be implemented by hardware executing corresponding software, or may be implemented by a combination of software and hardware. For details, refer to corresponding descriptions in the foregoing corresponding method embodiments. Alternatively, the apparatus has a function of implementing the network device described in embodiments of this application. For example, the apparatus includes a corresponding module, unit, or means (means) used by the network device to perform the steps related to the network device that are described in embodiments of this application. The function, unit, or means (means) may be implemented by software or hardware, or may be implemented by hardware executing corresponding software, or may be implemented by a combination of software and hardware. For details, refer to corresponding descriptions in the foregoing corresponding method embodiments.

Optionally, various modules in the apparatus 1300 in this embodiment of this application may be configured to perform the method described in FIG. 6 or FIG. 9 in embodiments of this application.

A person skilled in the art may further understand that various illustrative logical blocks (illustrative logical blocks) and steps (steps) that are listed in embodiments of this application may be implemented by using electronic hardware, computer software, or a combination thereof. Whether the functions are implemented by hardware or software depends on particular applications and a design requirement of the entire system. A person skilled in the art may use various methods to implement the functions for corresponding application, but it should not be considered that the implementation goes beyond the scope of embodiments of this application.

It may be understood that the processor in embodiments of this application may be an integrated circuit chip and has a signal processing capability. In an implementation process, steps in the foregoing method embodiments may be completed by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component.

The solutions described in this application may be implemented in various manners. For example, these technologies may be implemented by using hardware, software, or a combination of software and hardware. For hardware implementation, a processing unit configured to perform these technologies in a communication apparatus (for example, a base station, a terminal device, a network entity, or a chip) may be implemented in one or more general-purpose processors, a DSP, a digital signal processor, an ASIC, a programmable logic device, an FPGA or another programmable logic apparatus, a discrete gate or a transistor logic device, a discrete hardware component, or any combination thereof. The general-purpose processor may be a microprocessor. Optionally, the general-purpose processor may be any conventional processor, controller, microcontroller, or state machine. The processor may alternatively be implemented by a combination of computing apparatuses, for example, a digital signal processor and a microprocessor, a plurality of microprocessors, one or more microprocessors and a digital signal processor core, or any other similar configuration.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of an example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any other proper types of memories.

This application further provides a computer-readable medium. The computer-readable medium stores a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high density digital video disc (digital video disc, DVD)), a semiconductor medium (for example, a solid state disk (solid state disk, SSD)), or the like.

It may be understood that "an embodiment" mentioned in the specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

In this application, "at the same time" may be understood as being at a same time point, or may be understood as being within a period of time, or may be understood as being in a same period.

A person skilled in the art may understand that various numbers such as "first" and "second" in this application are merely used for differentiation for ease of description, and are not used to limit the scope of embodiments of this application. A specific value of a number (which may also be referred to as an index), a specific value of a quantity, and a location in this application are merely used for illustration purposes, but are not unique representation forms, and are not intended to limit the scope of embodiments of this application. Various numbers such as "first" and "second" in this application are merely used for differentiation for ease of description, and are not used to limit the scope of embodiments of this application.

In this application, an element represented in a singular form is intended to represent "one or more", but does not represent "one and only one", unless otherwise specified. In this application, unless otherwise specified, "at least one" is intended to represent "one or more", and "a plurality of" is intended to represent "two or more".

In addition, the terms "system" and "network" in this specification may be used interchangeably in this specification. The term "and/or" in this specification describes only an association relationship between associated objects and represents that three relationships may exist. For example, A and/or B may represent the following three cases: only A exists, both A and B exist, and only B exists, where A may be singular or plural, and B may be singular or plural. The character "/" usually indicates an "or" relationship between the associated objects.

The term "at least one of" in this specification represents all combinations or any combination of listed items. For example, "at least one of A, B, and C" may represent the following six cases: Only A exists, only B exists, only C exists, both A and B exist, both B and C exist, and all of A, B, and C exist, where A may be singular or plural, B may be singular or plural, and C may be singular or plural.

It may be understood that in embodiments of this application, "B corresponding to A" represents that B is associated with A, and B may be determined based on A. However, it should be further understood that, determining B based on A does not mean that B is determined only based on A, and B may also be determined based on A and/or other information.

Correspondence relationships shown in tables in this application may be configured, or may be predefined. Values of the information in the tables are merely examples, and other values may be configured. This is not limited in this application. When there is a correspondence between the first configuration information and the parameters, it is not necessarily required that all the correspondences shown in the tables need to be configured. For example, in the tables in this application, correspondences shown in some rows may alternatively not be configured. For another example, proper deformations and adjustments such as splitting and combination may be performed based on the foregoing tables. Names of the parameters shown in titles of the foregoing tables may alternatively be other names that can be understood by a communication apparatus, and values or representation manners of the parameters may alternatively be other values or representation manners that can be understood by the communication apparatus. During implementation of the foregoing tables, another data structure, such as an array, a queue, a container, a stack, a linear table, a pointer, a linked list, a tree, a graph, a structure, a class, a pile, or a hash table, may alternatively be used.

Predefinition in this application may be understood as definition, pre-definition, storage, pre-storage, pre-negotiation, pre-configuration, solidification, or pre-burning.

A person of ordinary skill in the art may understand that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and methods described in this application may alternatively be implemented in another manner. For example, the described apparatus embodiments are merely examples. For example, division into the units is merely logical function division and may be other division During actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of the embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

For same or similar parts in embodiments of this application, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The foregoing implementations of this application are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:
sending a first identifier to a core network device, wherein the first identifier indicates a transmission requirement;
receiving a first parameter from the core network device, wherein the first parameter indicates that a quality of service flow meets the transmission requirement; and
sending a plurality of pieces of first information to an access network device based on the quality of service flow, wherein the plurality of pieces of first information each comprise a second identifier, and the second identifier comprises marking information of a same data unit to which the first information belongs.

2. The method according to claim 1, wherein the second identifier further comprises a quality of service flow identifier.

3. The method according to claim 1 or 2, wherein the marking information indicates one or more types of the following information:
a quantity of pieces of first information in the data unit;
an identifier of the data unit;
generation time information of the data unit; and
a data volume of the data unit.

4. The method according to any one of claims 1 to 3, wherein the first information further comprises a third identifier, and the third identifier is used to mark the first information.

5. The method according to claim 4, wherein the third identifier indicates one or more types of the following information:
an index of the first information in the data unit to which the first information belongs;
an identifier of the first information; and
a data volume of the first information.

6. The method according to any one of claims 2 to 5, wherein before the sending the first information to the access network device, the method further comprises:
sending a fourth identifier to the access network device, wherein the fourth identifier comprises the quality of service flow identifier and/or one or more types of information in the marking information.

7. The method according to claim 6, wherein the fourth identifier further comprises time information of first information that arrives at the access network device for the first time.

8. The method according to claim 6 or 7, wherein the sending a fourth identifier to the access network device specifically comprises:
sending the fourth identifier to the access network device through any one of radio resource control RRC signaling, a media access control control element MAC CE, a physical uplink control channel PUCCH, or a physical uplink shared channel PUSCH.

9. The method according to any one of claims 1 to 8, wherein the transmission requirement requests to-be-transmitted data to be transmitted as a whole, and the to-be-transmitted data is the plurality of pieces of first information.

10. A communication method, comprising:
sending a fourth identifier to an access network device, wherein the fourth identifier comprises a quality of service flow identifier, and a quality of service flow corresponding to the quality of service flow identifier meets a transmission requirement; and
sending a plurality of pieces of first information to the access network based on the quality of service flow, wherein the plurality of pieces of first information each comprise a second identifier, and the second identifier comprises marking information of a same data unit to which the first information belongs.

11. The method according to claim 10, wherein the second identifier further comprises the quality of service flow identifier.

12. The method according to claim 10 or 11, wherein the marking information indicates one or more types of the following information:
a quantity of pieces of first information in the data unit;
an identifier of the data unit;
generation time information of the data unit; and
a data volume of the data unit.

13. The method according to any one of claims 10 to 12, wherein the first information further comprises a third identifier, and the third identifier is used to mark the first information.

14. The method according to claim 13, wherein the third identifier indicates one or more types of the following information:
an index of the first information in the data unit to which the first information belongs;
an identifier of the first information; and
a data volume of the first information.

15. The method according to claim 12, wherein the fourth identifier further comprises one or more types of information in the marking information.

16. The method according to any one of claims 10 to 15, wherein the fourth identifier further comprises time information of first information that arrives at the access network device for the first time.

17. The method according to any one of claims 10 to 16, wherein the sending a fourth identifier to an access network device specifically comprises:
sending the fourth identifier to the access network device through any one of radio resource control RRC signaling, a media access control control element MAC CE, a physical uplink control channel PUCCH, or a physical uplink shared channel PUSCH.

18. The method according to any one of claims 10 to 17, wherein the transmission requirement requests to-be-transmitted data to be transmitted as a whole, and the to-be-transmitted data is the plurality of pieces of first information.

19. A communication method, comprising:
receiving a first identifier from a terminal device, wherein the first identifier indicates a transmission requirement of the terminal device; and
sending a first parameter to the terminal device, wherein the first parameter indicates that a quality of service flow meets the transmission requirement.

20. The method according to claim 19, wherein the method further comprises:
sending the first parameter to an access network device or a user plane network element.

21. The method according to claim 19 or 20, wherein a plurality of pieces of first information corresponding to the quality of service flow are transmitted by the terminal device to the access network device, the plurality of pieces of first information each comprise a second identifier, and the second identifier comprises marking information of a same data unit to which the first information belongs.

22. The method according to claim 21, wherein the second identifier further comprises a quality of service flow identifier.

23. The method according to claim 21 or 22, wherein the marking information indicates one or more types of the following information:
a quantity of pieces of first information in the data unit;
an identifier of the data unit;
generation time information of the data unit; and
a data volume of the data unit.

24. The method according to any one of claims 21 to 23, wherein the first information further comprises a third identifier, and the third identifier is used to mark the first information.

25. The method according to claim 24, wherein the third identifier indicates one or more types of the following information:
an index of the first information in the data unit to which the first information belongs;
an identifier of the first information; and
a data volume of the first information.

26. The method according to any one of claims 19 to 25, wherein the transmission requirement requests to-be-transmitted data to be transmitted as a whole, and the to-be-transmitted data is the plurality of pieces of first information.

27. A communication method, comprising:
receiving, by an access network device, a plurality of pieces of first information from a terminal device, wherein the plurality of pieces of first information each comprise a second identifier, and the second identifier comprises marking information of a same data unit to which the first information belongs.

28. The method according to claim 27, wherein the second identifier further comprises a quality of service flow identifier, and the quality of service flow identifier indicates a quality of service flow corresponding to the first information.

29. The method according to claim 27 or 28, wherein the marking information indicates one or more types of the following information:
a quantity of pieces of first information in the data unit;
an identifier of the data unit;
generation time information of the data unit; and
a data volume of the data unit.

30. The method according to any one of claims 27 to 29, wherein the first information further comprises a third identifier, and the third identifier is used to mark the first information.

31. The method according to claim 30, wherein the third identifier indicates one or more types of the following information:
an index of the first information in the data unit to which the first information belongs;
an identifier of the first information; and
a data volume of the first information.

32. The method according to any one of claims 27 to 31, wherein before the receiving, by the access network device, first information sent by the terminal device, the method further comprises:
receiving, by the access network device, a first parameter sent by a core network device, wherein the first parameter indicates that the quality of service flow meets a transmission requirement.

33. The method according to any one of claims 27 to 32, wherein before the receiving, by the access network, first information sent by a terminal device, the method further comprises:
receiving, by the access network, a fourth identifier sent by the terminal device, wherein the fourth identifier comprises the quality of service flow identifier and/or one or more types of information in the marking information.

34. The method according to claim 33, wherein the fourth identifier further comprises time information of first information that arrives at the access network device for the first time.

35. The method according to claim 33 or 34, wherein the receiving, by the access network, a fourth identifier sent by the terminal device specifically comprises:
receiving, through any one of radio resource control RRC signaling, a media access control control element MAC CE, a physical uplink control channel PUCCH, or a physical uplink shared channel PUSCH, the fourth identifier sent by the terminal device.

36. The method according to any one of claims 27 to 35, wherein the transmission requirement requests to-be-transmitted data to be transmitted as a whole, and the to-be-transmitted data is the plurality of pieces of first information.

37. A communication apparatus, wherein the apparatus is configured to perform the method according to any one of claims 1 to 18.

38. A communication apparatus, comprising: a processor and a memory, wherein the processor is coupled to the memory, and the processor is configured to perform the method according to any one of claims 1 to 18.

39. A communication apparatus, wherein the apparatus is configured to perform the method according to any one of claims 19 to 26.

40. A communication apparatus, comprising: a processor and a memory, wherein the processor is coupled to the memory, and the processor is configured to perform the method according to any one of claims 19 to 26.

41. A communication apparatus, wherein the apparatus is configured to perform the method according to any one of claims 27 to 36.

42. A communication apparatus, comprising: a processor and a memory, wherein the processor is coupled to the memory, and the processor is configured to perform the method according to any one of claims 27 to 36.

43. A computer-readable storage medium, wherein the computer-readable storage medium stores a computer program or instructions; and when the computer program or the instructions are executed, a computer is enabled to perform the method according to any one of claims 1 to 18, or a computer is enabled to perform the method according to any one of claims 19 to 26, or a computer is enabled to perform the method according to any one of claims 27 to 36.

44. A computer program product, wherein the computer program product comprises computer program code; and when the computer program code is run on a computer, the computer is enabled to implement the method according to any one of claims 1 to 18, or implement the method according to any one of claims 19 to 26, or implement the method according to any one of claims 27 to 36.

45. A chip, comprising: a processor, wherein the processor is coupled to a memory, and the memory is configured to store a program or instructions; and when the program or the instructions are executed by the processor, an apparatus is enabled to perform the method according to any one of claims 1 to 18, the method according to any one of claims 19 to 26, or the method according to any one of claims 27 to 36.

46. A communication system, comprising: the communication apparatus according to either of claims 37 and 28, the communication apparatus according to either of claims 39 and 40, and the communication apparatus according to either of claims 40 and 41.
